Europäisches Patentamt

European Patent Office

Office européen des brevets

(19)

(11) **EP 1 220 086 A2**

(12) **EUROPEAN PATENT APPLICATION**

(43) Date of publication:
03.07.2002 Bulletin 2002/27

(51) Int Cl.⁷: **G06F 7/50**

(21) Application number: 01130114.0

(22) Date of filing: 18.12.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 19.12.2000 JP 2000385583

(71) Applicant: **NEC CORPORATION**
**Tokyo (JP)**

(72) Inventor: **Sato, Shoichiro,**
**NEC IC Microcomputer Systems,Ltd.**
**Kawasaki-shi, Kanagawa (JP)**

(74) Representative:
**von Samson-Himmelstjerna, Friedrich R.,**
**Dipl.-Phys. et al**
**SAMSON & PARTNER**
**Widenmayerstrasse 5**
**80538 München (DE)**

(54) **Shift circuits and partial sticky bit detection for floating point calculation**

(57)     In a shift and shift-out detecting circuit, a plurality of partial shift circuits respectively have bit shift quantities which are different from each other, and are connected in series. Each of the plurality of partial shift circuits receives a shift result as a previous shift result from the partial shift circuit of a previous stage and a corresponding shift instruction, shifts the previous shift result by the corresponding bit shift quantity in response to the shift instruction to produce a current shift result, and outputs the current shift result to the partial shift circuit of a subsequent stage. A plurality of shift-out detecting circuits are respectively provided for the plurality of partial shift circuits. Each of the plurality of shift-out detecting circuits detects a shift-out of "1" bit from the current shift result and the corresponding shift instruction and generates a partial sticky signal when the shift-out is detected. A collecting circuit collects the partial sticky signals from the plurality of shift-out detecting circuits and generates a sticky signal to indicate generation of the shift-out.

Fig. 5

## Description

## Background of the Invention

### 1. Field of the Invention

The present invention relates to a shift and detecting circuit which detects the shift-out of "1" through a shifting process by a shift circuit for a rounding process to the shift result, and a floating-point calculating circuit using the same.

### 2. Description of the Related Art

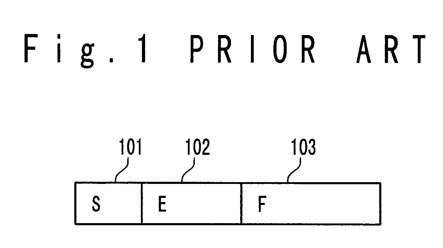

For example, a floating-point number is expressed by a sign part 101, an exponent part 102, a mantissa part 103 in a microprocessor, as shown in Fig. 1.

In the sign part 101, a sign S of "0" indicates a positive number and a sign S of "1" indicates a negative number. Also, in the exponent part 102, an exponent E is obtained by an exponent bias b to an actual exponent (for example, $b = 127_{10}$ in a single-precision floating-point representation of IEEE (Institute of Electrical and Electronics Engineers) standard). Also, in the mantissa part 103, a mantissa F is normalized (the most significant digit of the mantissa is set to a non-zero value) to be "1" at the left of the decimal point.

That is, mantissa F is represented by a summation of an integer of "1" and a fractional number f (f<1) and has the form of (F=1+f). Therefore, the floating-point number X shown in Fig. 1 is given by the equation (1).

$$X=(-1)^{s}2^{(E-b)}(1+f) \qquad (1)$$

Hereinafter, a procedure of an adding process using the floating-point representation is described as an example. It is supposed that the addition of a floating-point number $X_1$ ($S=S_1$, $E=E_1$, $f=f_1$) and a floating-point number $X_2$ ($S=S_2$, $E=E_2$, $f=f_2$) is carried out and a floating-point number $X_3$ ($S=S_3$, $E=E_3$, $f=f_3$) is obtained as the calculation result of the summation ($X_1+X_2$). It should be noted that the sign S is 1 bit, the exponent E is 3 bits and a fractional number f of mantissa F is 4 bits, for convenience, and the exponent E is expressed by a decimal number, and the mantissa F is expressed by a binary number.

For example, it is supposed that ($S_1=0$, $E_1=4$, $f_1=0.0011$), ($S_2=0$, $E_2=2$, $f_2=0.0001$) and the floating-point numbers $X_1$ and $X_2$ are given by the following equations (2) and (3), respectively.

$$X_1 = (-1)^{0}2^{(4-b)}(1.1011) \qquad (2)$$

$$X_2 = (-1)^{0}2^{(2-b)}(1.0001) \qquad (3)$$

First, the exponent $E_1$ and the exponent $E_2$ are compared and the exponent with a smaller value is aligned to the exponent with the exponent with a large value. In this example, ($E_1=4$, $E_2=2$), the mantissa $F_2$ of the floating-point number $X_2$ is shifted into a right direction (to a direction of the least significant bit) by the difference of the exponents ($E_1-E_2=2$). As a result, the equation (2) is transformed as shown in the following equation (4).

$$X_2 = (-1)^{0}2^{(4-b)}(0.010001) \qquad (4)$$

Next, a rounding process is carried out to make the decimal part f3 to be 4 bits. For example, as shown in equation (5), (f3=0.0100) is set.

$$X_2 = (-1)^{0}2^{(4-b)}(0.0100) \qquad (5)$$

The fifth and sixth bits of the decimal part f3 from the decimal point are cut off and shifted out through the rounding process.

Next, the floating-point number $X_3$ as the summation of the floating-point number $X_1$ and the floating-point number $X_2$ is calculated from the equations (2) and (5), and the following equation (6) is obtained.

$$X_3 = (-1)^{0}2^{(4-b)}(1.1111) \qquad (6)$$

Next, the digit of "1" is searched in the mantissa part, and the whole mantissa part is shifted into the right direction (into the lower bit side) and is normalized such that this "1" become an integer. That is, as a result of the calculation, when the mantissa is (10. ···), the mantissa is set to (1.0 ···). In this example, because the integer of the mantissa part is already 1, the right shift for the normalization is not carried out.

Then, the rounding process is generally carried out to make the decimal part f3 to be 4 bits. However, in this example, the floating-point number $X_3$ is finally given by the above equation (6).

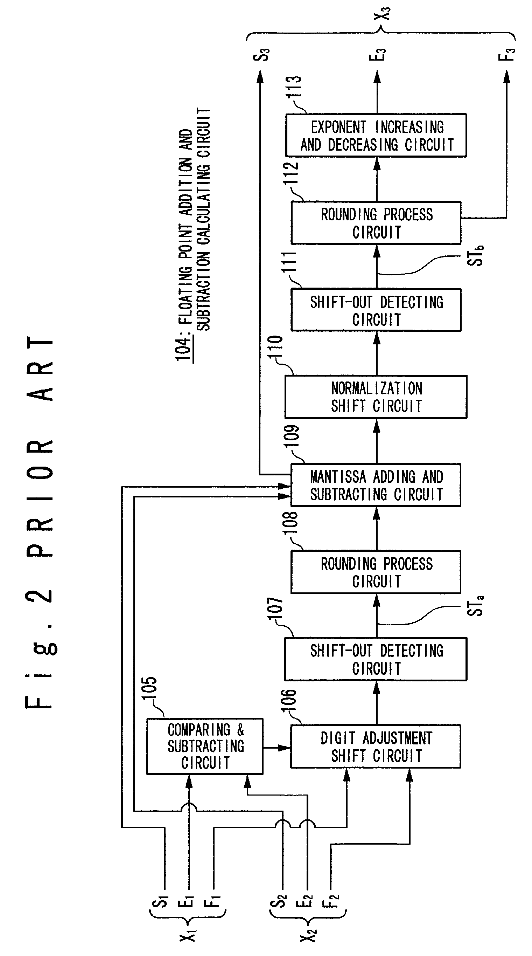

Such a floating-point calculation procedure is carried out using a floating-point addition and subtraction calculating circuit 104 in the microprocessor, as shown in Fig. 2.

As shown in Fig. 2, the floating-point number addition and subtraction calculating circuit 104 is composed of a comparing and subtracting circuit 105 which outputs a comparing signal and a digit adjustment shift quantity signal based on the magnitudes of the exponents $E_1$ and $E_2$, a digit adjustment shift circuit 106 which carries out a shifting process to the direction of the lower bit based on the digit adjustment shift quantity signal, a shift-out detecting circuit 107, a rounding process circuit 108 which carries out the rounding process, a mantissa addition and subtraction calculating circuit 109 which carries out the addition and subtraction calculation of the mantissas, a normalization shift circuit 110 which carries out a shifting process by a normalization shift quantity, a shift-out detecting circuit 111, a rounding process circuit 112, an exponent increasing and decreasing circuit 113 which corrects the exponent.

The comparing and subtraction circuit 105 inputs the exponents $E_1$ and $E_2$ of two floating-point numbers $X_1$ and $X_2$, and determines a larger one of the exponents $E_1$ and $E_2$. The difference $(E_1-E_2)$ or $(E_2-E_1)$ is calculated and the comparing signal and a digit adjustment shift quantity signal are outputted.

The digit adjustment shift circuit 106 inputs the mantissa $F_1$ and $F_2$ of the floating-point numbers $X_1$ and $X_2$, the comparing signal and the digit adjustment shift quantity signal, and shifts one of the exponents $E_1$ and $E_2$ based on the comparing signal and the digit adjustment shift quantity signal such that the smaller exponent is made to be coincident with the larger value in the digit, and such that the smaller one of the exponents $E_1$ and $E_2$ is shifted in the direction of the lower bit by the difference between the exponents.

The shift-out detecting circuit 107 calculates a logical summation of all the shifted-out bits. When the logical summation is "1", the shift-out detecting circuit 107 outputs a sticky signal STa to indicate that a rounding process is carried out.

The rounding process circuit 108 selects and carries out a predetermined rounding method based on the sticky signal STa and the shifted-out bits.

The mantissa addition and subtraction calculating circuit 109 carries out the addition and subtraction calculation of the mantissas after the digit adjusting process by the digit adjustment shift circuit 106.

The normalization shift circuit 110 calculates the number of digits of the integer part of the addition and subtraction calculation result obtained from the mantissa addition and subtraction calculating circuit 109 from the highest digit of "1" as a normalization shift quantity and carries out a shifting process by the normalization shift quantity.

The shift-out detecting circuit 111 calculates a logical summation of all the shifted-out bits as the result of the normalization shift. When the logical summation is "1", the shift-out detecting circuit 111 outputs a sticky signal STb to indicate that a rounding process is carried out.

The rounding process circuit 112 selects one of the rounding processes based on the sticky signal STb and the shifted-out bits, and shortens the calculation result obtained from the normalization shift circuit 110 to the number of digits of the format and outputs the mantissa $E_3$.

The exponent increasing and decreasing circuit 113 corrects the exponent based on the normalization shift quantity obtained from the normalization shift circuit 110 and outputs the exponent $E_3$.

Here, the sticky signal STa is used for the determination of whether data correction should be carried out as the result of the digit adjustment by the floating-point calculation.

The rounding process circuit 108 (112) refers to the sticky signal STa (STb) for reduction of an accumulated error to select and carry out one of the rounding processes such as a rounding process in which a value is rounded to a nearly equal value, a rounding process in which a value is rounded to zero, a rounding process in which a value is rounded to the negative infinity, and a rounding process in which a value is rounded to the positive infinity.

By the way, accompanying the leaping improvement in the operation frequency of the microprocessor in recent years, there is a severe request for the improvement in the calculation speed. For this purpose, the improvement in the processing speed of the detection of the shift-out of "1" (rounding detection) is demanded.

However, in the circuit structure of the above conventional example, the shift-out detecting circuit 107 is arranged in the post stage of the digit adjustment shift circuit 106. Thus, after the shifting process by the digit adjustment shift circuit 106 is completed, the generation of the shift out (rounding) of "1" is detected. Therefore, the output of the sticky signal STa is delayed.

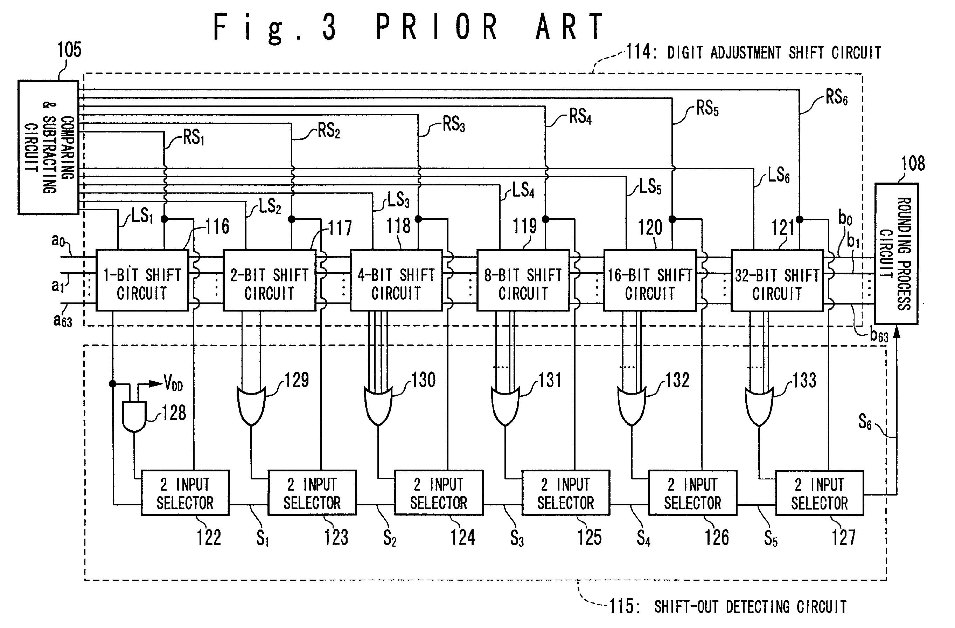

From the above reason, as shown in Fig. 3, another conventional example is proposed in which the digit adjustment shift circuit 114 and the shift-out detecting circuit 115 are connected in parallel, and a shifting process is carried out in parallel to the shift-out detecting process (rounding detecting process).

As shown in Fig. 3, the digit adjustment shift circuit 114 is composed of a 1-bit shift circuit 116 which is possible to carry out 1-bit shifting process in accordance with a shift quantity signal given from the comparing and subtracting circuit 105, a 2-bit shift circuit 117 which is possible to carry out 2-bit shifting process, a 4-bit shift circuit 118 which is possible to carry out 4-bit shifting process, a 8-bit shift circuit 119 which it is possible to carry out a 8-bit shifting process, a 16-bit shift circuit 120 which is possible to carry out a 16-bit shifting process, a 32-bit shift circuit 121 which is possible to carry out a 32-bit shifting process.

The digit adjustment shift circuit 114 shifts 64-bit mantissa $(a_{63}a_{62} \cdots a_3a_2a_1a_0)$ by an optional shift quantity from 1 bit to 64 bits by the combination of the above bit shift circuits, and outputs the shift result $(b_{63}b_{62} \cdots b_3b_2b_1b_0)$ to the rounding process circuit 108.

Also, the shift-out detecting circuit 115 is composed of 2-input selectors 122, 123, ..., 127 to detect the shift-out of "1" in the 1-bit shift circuit 116, the 2-bit shift circuit 117, the 4-bit shift circuit 118, the 8-bit shift circuit 119, the 16-bit shift circuit 120, and the 32-bit shift circuit 121, respectively. The shift-out detecting circuit 115 checks existence or non-existence of the shift out "1" based on the shift quantity signal given from the comparing and subtracting circuit 105 and a part of data on the shifting process by the digit adjustment shift circuit 114.

As shown in Fig. 3, the 1-bit shift circuit 116 shifts supplied the mantissa $(a_{63}a_{62} \cdots a_3a_2a_1a_0)$ into the right direction by 1 bit and outputs the shift result to the 2-bit shift circuit 117, when receiving the right 1-bit shift signal $RS_1$ of "1".

The 2-bit shift circuit 117 shifts the shift result outputted from the 1-bit shift circuit 116 into the right direction by 2 bits and transfers the shift result to the 4-bit shift circuit 118, when receiving the right 2-bit shift signal $RS_2$ of "1" from the comparing and subtracting circuit 105.

The 4-bit shift circuit 118 shifts the shifting process outputted from the 2-bit shift circuit 117 into the right direction by 4 bits and output the shift result to the 4-bit shift circuit 119, when receiving the right 4-bit shift signal $RS_3$ of "1".

The 8-bit shift circuit 119 shifts the shift result outputted from the 4-bit shift circuit 118 into the right direction by 8 bits and outputs the shift result to the 16-bit shift circuit 120, when receiving "1" the right 8-bit shift signal $RS_4$.

The 16-bit shift circuit 120 shifts the shift result outputted from the 8-bit shift circuit 119 into the right direction by 16 bits and outputs the shift result to the 32-bit shift circuit 121, when receiving the right 16-bit shift signal $RS_5$ of "1".

The 32-bit shift circuit 121 shifts the shift result outputted from the 16-bit shift circuit 120 into the right direction by 32 bits and outputs the shift result to the rounding process circuit 108, when receiving the right 32-bit shift signal $RS_6$ of "1".

It should be noted that the 1-bit shift circuit 116 shifts the mantissa $(a_{63}a_{62} \cdots a_3a_2a_1a_0)$ into the left direction by 1 bit, when receiving the left 1-bit shift signal $LS_1$ of "1".

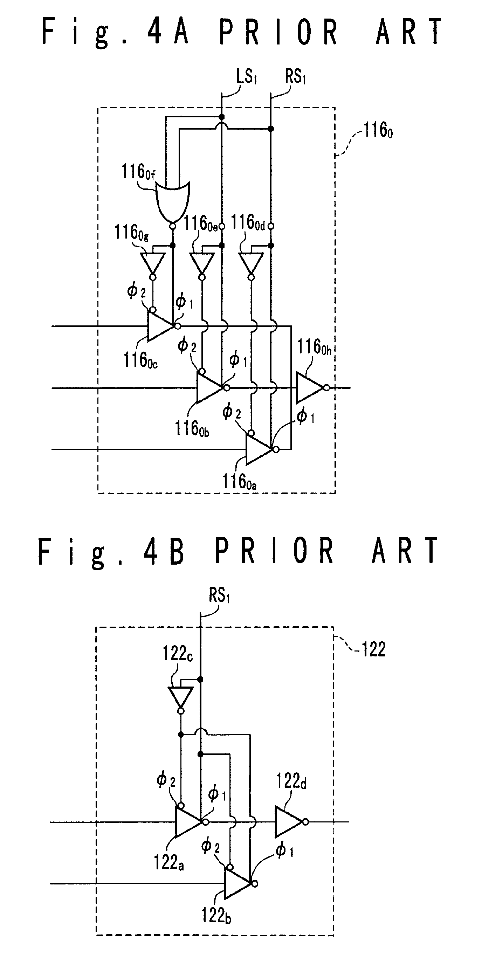

The 1-bit shift circuit 116 is composed of 64 3-input selectors corresponding to the number of bits of the mantissa $(a_{63}a_{62} \cdots a_3a_2a_1a_0)$. As shown in Fig. 4A, the 3-input selector 1160 corresponding to the least significant bit is composed of clock inverter circuits 1160a, 1160b and 1160c each of which is set to a conductive state to invert an input signal or to a blocking-off state to prevent the passage of the input signal, according to the state ("1" or "0") of the control signal supplied to two control terminals $\phi_1$ and $\phi_2$, an inverter circuits 1160d which receives and inverts the right 1-bit shift signal $RS_1$ to give the control terminal $\phi_2$ of the clock inverter circuit 1160a, an inverter circuit 1160e which receives and inverts the left 1-bit shift signal $LS_1$ and gives the control terminal $\phi_2$ of the clock inverter circuit 1160b, a NOR circuit 1160g which receives the right 1-bit shift signal $RS_1$ and the left 1-bit shift signal $LS_1$, and output a non-selection signals of "1" only when the right 1-bit shift signal $RS_1$ and the left 1-bit shift signal $LS_1$ are both "0", an inverter circuit $11_{60}g$ which receives and inverts the output signal of the NOR circuit 1160f and gives the control terminal $\phi_2$ of the clock inverter circuit 1160c, of an inverter circuit 6011h which inverts the output signals from the clock inverter circuit 1160a, the clock inverter circuit 1160b and the clock inverter circuit 1160c.

Each of the 3-input selectors corresponding to bits from the second bit to the most significant bit has the same circuit structure as the 3-input selector 1160. Also, each of the 2-bit shift circuit 117, the 4-bit shift circuit 118, the 8-bit shift circuit 119, the 16-bit shift circuit 120, and the 32-bit shift circuit 121 has the same circuit structure as the 1-bit shift circuit 116.

As shown in Fig. 4B, the 2-input selector 122 is composed of clock inverter circuits 122a and 122b each of which is set to a conductive state to invert an input signal or to a blocking-off state to prevent the passage of the input signal, in accordance with the state of the control signals supplied to two control terminals $\phi_1$ and $\phi_2$, an inverter circuit 122c which receives and inverts the right 1-bit shift signal $RS_1$ and supplies the inverted signal to the control terminal $\phi_2$ of the clock inverter circuit 122a and the control terminal $\phi_1$ of the clock inverter circuit 122b, and an inverter circuit 122d which inverts the output signals from the clock inverter circuit 122a and the clock inverter circuit 122b. Each of the 2-input selectors 123, 124, ..., 127 has the same circuit structure as the 2-input selector 122.

In the 2-input selector 122, when the right 1-bit shift signal $RS_1$ of "1" is inputted, the clock inverter circuit 122a is set to the conductive state and the clock inverter circuit 122b is set to the blocking-off state. At this time, when the signal "1" is inputted through an AND circuit 128'to indicate that the least significant bit a0 of the mantissa $(a_{63}a_{62} \cdots a_3a_2a_1a_0)$ is "1", the inverter circuit 122d is outputs the sticky signal S1 of the "1" state to indicate that the shift out (rounding) of "1" occurs.

In the same way, in the 2-input selector 123, when the signal of "1" is inputted through an OR circuit 129 to indicate that either of lower 2 bits of the output of the 2-bit shift circuit 117 is "1" in case of the right 2-bit shift signal $RS_2$ of "1", the sticky signal S2 of the "1" state is outputted.

In the 2-input selector 124, when the right 4-bit shift signal $RS_3$ of "1" is inputted, and the signal "1" is inputted through an OR circuit 130 to indicate that either one of the lower 4 bits of the output of the 4-bit shift circuit 118 is "1", the sticky signal S3 of the "1" state is outputted.

In the 2-input selector 125, when the right 8-bit shift signal $RS_4$ of "1" is inputted, and the signal "1" is inputted through an OR circuit 131 to indicate that either one of the lower 8-bit of the output of the 8-bit shift circuit 119 is "1", the sticky signal S4 of the "1" state is outputted.

In the 2-input selector 126, when the right 16-bit shift signal $RS_5$ of "1" is inputted, and the signal "1" is inputted through an OR circuit 132 to indicate that either one of the lower 16 bits of the output of the 16-bit shift circuit 120 is "1", the sticky signal S5 of the "1" state is outputted.

In the 2-input selector 127, when the right 32-bit shift signal $RS_6$ of "1" is inputted, and the signal "1" is inputted through an OR circuit 133 to indicate that either one of the lower rank 32 bits of the output of the 32-bit shift circuit 121 is "1", the sticky signal S6 of the "1" state is outputted.

Also, in the 2-input selector 122, when the right 1-bit shift signal $RS_1$ is "0", the clock inverter circuits 122b is set to the conductive state and data supplied to the clock inverter circuit 122b is outputted from the inverter circuit 122d as it is. Each of the post stages of 2-input selectors 123, 124, ..., 127 operates in the same way.

However, when the sticky signal S1 of the "1" state is generated in the 2-input selector 122, the sticky signal S1 is outputted via the post stages of the 2-input selectors 123, 124, ..., and 127 to the rounding process circuit 108. As shown in Figs. 3, 4A and 4B, the logic stages of "13" are needed until the output of the sticky signal S1, and the number of stages is more than the logic stages of "12" in the digit adjustment shift circuit 114. Therefore, after an output from the digit adjustment shift circuit 114 is accomplished, existence or non-existence of the shift-out of "1" is proved.

Therefore, the rounding process in the rounding process circuit 108 takes more calculation time to hinder the improvement in the operation speed of the floating-point calculating circuit. Thus, there is a problem that it is difficult to take the measure of leaping improvement in the operation frequency of the microprocessor in recent years.

For example, in the case that a scientific and engineering calculation and computer graphics are carried out using the microprocessor, the floating-point calculation needs to be carried in a high precision at high speed. However, even if a high microprocessor having a high operation frequency is used for the speeding-up of the calculation, the high speed calculation cannot be achieved. As a result, the calculation time for the scientific and engineering calculation is increased to stand as a bar against the practical use.

In conjunction with the above description, a parallel processor is disclosed in Japanese Laid Open Patent application (JP-A-Heisei 6-139049). In this reference, the parallel processor is composed from a plurality of calculation sections and a control unit. When the calculation result by the calculation section generates a positive overflow, the parallel processor sets the positive maximum which can be expressed to a calculation result and continues calculation. Also, the parallel processor has a shifter and carries out a rounding process in the direction of zero when a right shift is carried out by the shifter.

Also, a shift and a rounding circuit are disclosed in Japanese Laid Open Patent application (JP-A-Heisei 7-200265). In this reference, the shift and a rounding circuit shifts a word X of bits Xi (i is an integer from 0 to (N-1)) by m digits (m is an integer and $0<m\leqq\mu\leqq N-1$) to produce a word Y of bits Yi. The shift and a rounding circuit is composed of (a) a plurality of input terminals, each of which receives one of bits Xi, (b) a plurality of output terminals, each of which corresponds to one of bits Yi, (c) a plurality of first multiplexer circuits, each of which is connected with one of the output terminals, the first multiplexer circuit being connected with the output terminal corresponding to Yj (j is an integer from 1 to (N-1-m)) connects the output terminal corresponding to Yj with the input terminal corresponding to Xj+m, and (d) a second multiplexer circuit which connects Y0 with Y0 and is connected with the signal which has the a summation value of X0 and Xm.

Also, a normalization apparatus using redundant shift number prediction and shift error correction is disclosed in Japanese Laid Open Patent application (JP-A-Heisei 8-87399). In this reference, an addition and subtraction calculation section inputs two positive binary operands, at least one of them being normalized to have "1" as the most significant digit, and carries out addition or subtraction of the two operands based on an instruction of the addition or subtraction calculation. A normalization shift section shifts the whole of addition and subtraction calculation result to have the most significant bit of "1". A shift number redundant predicting section predicts the number of digits from the most significant bit to the highest bit of "1" in the addition and subtraction calculation result within an error of n digits using the two binary operands. A shift error detecting section detects a difference of the most significant bit in the normalization expression and the highest bit of "1" in the normalization shift. A normalization shift correcting section carries out the shift by an optional number of digits from 0 to n. The addition result by the addition and subtraction calculation section is shifted by the normalization shift section using the prediction result with redundant predicting section, an the shift result is shifted by the normalization shift correcting section using the shift error detection result, and outputted as the normalization result.

Also, a sticky bit detecting circuit is disclosed in Japanese Laid Open Patent application (JP-A-Heisei 9-204295). In this reference, when a first exponent of a smaller one of two numbers is shifted to make it align with a second exponent of a larger one of the two numbers in digit, the sticky bit detecting circuit of the floating-point addition and subtraction calculating circuit compares a shift quantity when a mantissa part of the smaller number should be shifted and a leading zero quantity of 0 continuing from the least significant bit in a mantissa part of the smaller number, and the sticky bit is set to "1" when the shift quantity is larger than the leading zero quantity.

Also, a shift and rounding circuit is disclosed in Japanese Laid Open Patent application (JP-A-Heisei 7-200265). In this reference, a shift register shifts a word $X = XN\text{-}1XN\text{-}2 \cdots X0$ by m bits in a right direction, to produce a calculation result of X/2m. A rounding process is carried out using the data obtained by the right shift operation by m bits and the shifted out bits Xm-1, Xm-2, $\cdots$ X0.

Also, a sticky signal generating circuit of a rounding process circuit is disclosed in Japanese Laid Open Patent application (JP-A-Heisei 5-56534). In this reference, the circuit is composed of a first circuit which selectively shifts a shift control signal in accordance with a binary decimal distinguishing signal and outputs a correction shift control signal, and a second circuit which generates a sticky signal based on a part of the shifted out data which is defined by the correction shift control signal.

## Summary of the Invention

Therefore, an object of the present invention is to provide a shift and detecting circuit which detects the generation of the shift-out of "1" at high speed.

Another object of the present invention is to provide a floating-point calculating circuit using the above shift and detecting circuit.

Still another of the present invention is to provide a shift and rounding circuit which detects the generation of the shift-out of "1" at high speed, and achieves a high speed rounding process.

In an aspect of the present invention, a shift and shift-out detecting circuit includes a plurality of partial shift circuits, a plurality of shift-out detecting circuits and a collecting circuit. The plurality of partial shift circuits respectively have bit shift quantities which are different from each other, and are connected in series. Each of the plurality of partial shift circuits receives a shift result as a previous shift result from the partial shift circuit of a previous stage and a corresponding shift instruction, shifts the previous shift result by the corresponding bit shift quantity in response to the shift instruction to produce a current shift result, and outputs the current shift result to the partial shift circuit of a subsequent stage. The plurality of shift-out detecting circuits are respectively provided for the plurality of partial shift circuits. Each of the plurality of shift-out detecting circuits detects a shift-out of "1" bit from the current shift result and the corresponding shift instruction and generates a partial sticky signal when the shift-out is detected. The collecting circuit collects the partial sticky signals from the plurality of shift-out detecting circuits and generates a sticky signal to indicate generation of the shift-out.

Here, the plurality of partial shift circuits may be connected in series in order of larger bit shift quantities. Alternatively, the plurality of partial shift circuits may be connected in series in order of smaller bit shift quantities.

In this case, the shift and shift-out detecting circuit may further include a relaying circuit which collects the partial sticky signals from predetermined ones of the plurality of shift-out detecting circuits to produce a new partial sticky signal and outputs the new partial sticky signal to the collecting circuit.

In this case, the bit shift quantities may be $2^n$ (n is an integer, equal to or larger than 0).

Also, when the plurality of partial shift circuits are connected in series in order of smaller bit shift quantities, the partial sticky signal from the partial shift-out detecting circuit for the bit shift quantity of 1 bit may be supplied to the relaying circuit via the partial shift-out detecting circuit for the bit shift quantity of 4 bits.

Also, when the plurality of partial shift circuits are connected in series in order of larger bit shift quantities, the partial sticky signal from the partial shift-out detecting circuit for the bit shift quantity of 4 bits may be supplied to the collecting circuit via the partial shift-out detecting circuit for the bit shift quantity of 2 bit.

In another aspect of the present invention, a floating-point calculating circuit includes a comparing and subtracting circuit, a digit adjustment shift and shift-out detecting circuit, a first rounding process circuit and a summing circuit. The comparing and subtracting circuit inputs a first exponent of a first floating-point number and a second exponent of a second floating-point number, and generates a shit instruction indicating a difference between the first and second exponents. The digit adjustment shift and shift-out detecting circuit carries out a first shifting operation of one of a first mantissa of the first floating-point number and a mantissa of the second floating-point number in response to the shit instruction, and detects shift-out in the first shifting operation in parallel to the first shifting operation to generate a first sticky signal. The first rounding process circuit carries out a first rounding operation to the shifted mantissa in response to the first sticky signal when the shift-out is detected by the first shift-out detecting circuit. The summing circuit inputs a first sign of the first floating-point number and a second sign of the second floating-point number, and adds the shifted mantissa and the non-shifted mantissa based on the first and second signs.

Here, the digit adjustment shift and shift-out detecting circuit may include a plurality of partial shift circuits, a plurality of shift-out detecting circuits and a collecting circuit. The plurality of partial shift circuits respectively have bit shift quantities different from each other, and are connected in series. Each of the plurality of partial shift circuits receives a shift result as a previous shift result from the partial shift circuit of a previous stage and a corresponding partial shift instruction of the shift instruction, shifts the previous shift result by the corresponding bit shift quantity in response to the shift instruction to produce a current shift result, and outputs the current shift result to the partial shift circuit of a subsequent stage. The partial shift circuit of the first stage receives the one mantissa as the previous shift result and the partial shift circuit of the last stage outputs the current shift result as the shifted mantissa to the first rounding process circuit. The plurality of shift-out detecting circuits are respectively provided for the plurality of partial shift circuits. Each of the plurality of shift-out detecting circuits detects a partial shift-out of "1" bit from the current shift result and the corresponding partial shift instruction and generates a partial sticky signal when the partial shift-out is detected. The collecting circuit collects the partial sticky signals from the plurality of partial shift-out detecting circuits and generates the first sticky signal to indicate generation of the first shift-out.

In this case, the plurality of partial shift circuits may be connected in series in order of larger bit shift quantities. Alternatively, the plurality of partial shift circuits may be connected in series in order of smaller bit shift quantities.

In this case, the digit adjustment shift and shift-out detecting circuit may further include a relaying circuit which collects the partial sticky signals from predetermined ones of the plurality of shift-out detecting circuits to produce a new partial sticky signal and outputs the new partial sticky signal to the collecting circuit.

Also, the bit shift quantities may be $2^n$ (n is an integer equal to or larger than 0).

Also, when the plurality of partial shift circuits are connected in series in order of smaller bit shift quantities, the partial sticky signal from the partial shift-out detecting circuit for the bit shift quantity of 1 bit may be supplied to the relaying circuit via the partial shift-out detecting circuit for the bit shift quantity of 4 bits. Also, when the plurality of partial shift circuits are connected in series in order of larger bit shift quantities, the partial sticky signal from the partial shift-out detecting circuit for the bit shift quantity of 4 bits may be supplied to the collecting circuit via the partial shift-out detecting circuit for the bit shift quantity of 2 bit.

Also, the floating-point calculating circuit may further include a normalization shift and shift-out detecting circuit, a second rounding process circuit, and an exponent increasing and decreasing circuit. The normalization shift and shift-out detecting circuit carries out a normalizing operation to the summation result from the summing circuit, and detects a second shift-out to generate a second sticky signal. The second rounding process circuit carries out a second rounding operation to the normalized summation result in response to the second sticky signal when the shift-out is detected by the first shift-out detecting circuit. The exponent increasing and decreasing circuit adds the first and second exponents.

In this case, the normalization shift and shift-out detecting circuit may include a plurality of partial shift circuits, a plurality of shift-out detecting circuits and a collecting circuit. The plurality of partial shift circuits respectively have bit shift quantities different from each other, and are connected in series. Each of the plurality of partial shift circuits receives a shift result as a previous shift result from the partial shift circuit of a previous stage and a corresponding partial shift instruction of the shift instruction, shifts the previous shift result by the corresponding bit shift quantity in response to the shift instruction to produce a current shift result, and outputs the current shift result to the partial shift circuit of a subsequent stage. The partial shift circuit of the first stage receives the summation by the summing circuit as the previous shift result and the partial shift circuit of the last stage outputs the current shift result as the normalized summation to the second rounding process circuit. The plurality of shift-out detecting circuits are respectively provided for the plurality of partial shift circuits. Each of the plurality of shift-out detecting circuits detects a partial shift-out of "1" bit from the current shift result and the corresponding partial shift instruction and generates a partial sticky signal when the partial shift-out is detected. The collecting circuit collects the partial sticky signals from the plurality of partial shift-out detecting circuits and generates the second sticky signal to indicate generation of the first shift-out.

In this case, the plurality of partial shift circuits may be connected in series in order of larger bit shift quantities. Alternatively, the plurality of partial shift circuits may be connected in series in order of smaller bit shift quantities.

Also, the normalization shift and shift-out detecting circuit may further include a relaying circuit which collects the partial sticky signals from predetermined ones of the plurality of shift-out detecting circuits to produce a new partial sticky signal and outputs the new partial sticky signal to the collecting circuit.

Also, the bit shift quantities may be $2^n$ (n is an integer equal to or larger than 0).

**Brief Description of the Drawings**

Fig. 1 is a diagram to show data structure in a conventional example of floating-point calculating unit;
Fig. 2 is a diagram to show the conventional example of floating-point calculating unit;
Fig. 3 is a diagram to show a digit adjustment shift circuit in the conventional example of floating-point calculating unit;
Figs. 4A and 4B are diagrams to the circuit structures in the conventional example of floating-point calculating unit;
Fig. 5 is a block diagram showing the circuit structure of a shift and shift-out detecting circuit according to a first embodiment of the present invention;
Fig. 6 is a block diagram showing the detailed circuit structure of the shift and shift-out detecting circuit in the first embodiment;
Fig. 7 is a circuit diagram showing the circuit structure of a multiplexer circuit of the shift circuit in the first embodiment;

Fig. 8 is a circuit diagram showing the circuit structure of a 1-bit detecting circuit of the shift-out detecting circuit in the first embodiment;

Fig. 9 is a circuit diagram showing the circuit structure of a 2-bit detecting circuit of the same shift-out detecting circuit;

Fig. 10 is the circuit diagram showing the circuit structure of a 4-bit detecting circuit of the shift-out detecting circuit in the first embodiment;

Fig. 11 is a circuit diagram showing the circuit structure of an 8-bit detecting circuit of the shift-out detecting circuit in the first embodiment;

Fig. 12 is a circuit diagram showing the circuit structure of a 16-bit detecting circuit of the shift-out detecting circuit;

Fig. 13 is a circuit diagram showing the circuit structure of a 32-bit detecting circuit of the shift-out detecting circuit in the first embodiment;

Figs. 14A to 14C are diagrams to show the operation of the shift circuit and the shift-out detecting circuit in the first embodiment;

Fig. 15 is a block diagram showing the circuit structure of the floating-point addition and subtraction calculating circuit in which the shift and shift-out detecting circuit is incorporated;

Fig. 16 is a circuit diagram showing the circuit structure of a multiplexer circuit of the shift circuit according to a second embodiment of the present invention;

Fig. 17 is a block diagram showing the circuit structure of the shift and shift-out detecting circuit according to a third embodiment of the present invention;

Fig. 18 is a circuit diagram showing the circuit structure of a 4-bit detecting circuit and a 2-bit detecting circuit of the shift-out detecting circuit in the third embodiment;

Fig. 19 is a circuit diagram showing the circuit structure of a multiplexer circuit as a modification of the shift circuit according to the first embodiment of the present invention;

Fig. 20 is a circuit diagram showing the circuit structure of a 3-bit detecting circuit as another modification of the shift-out detecting circuit according to the first embodiment of the present invention; and

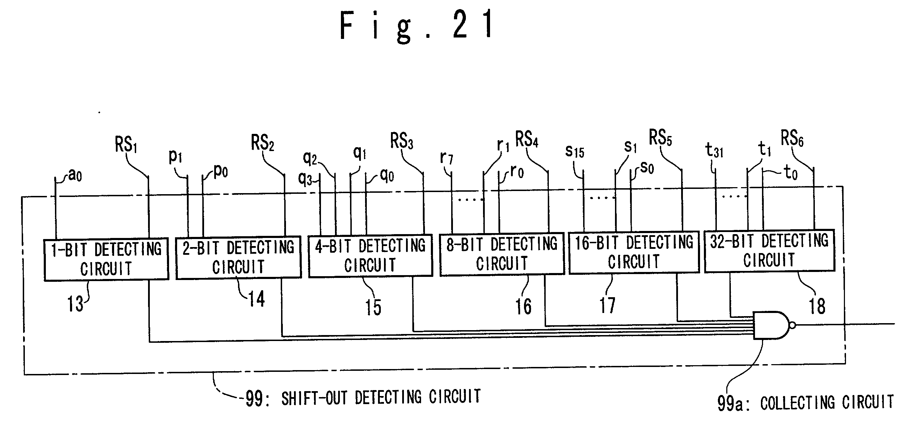

Fig. 21 is a block diagram showing the circuit structure of the shift-out detecting circuit as still another modification in the first embodiment of the present invention.

**Description of the Preferred Embodiments**

Hereinafter, the embodiments of the present invention will be described below in detail with reference to the attached drawings. The description will be given with reference to the embodiments.

In the circuit structure of the present invention, one of partial rounding detection signals which is outputted from at least one of partial rounding detecting circuits other than the partial rounding detecting circuit of the last stage does not pass through another partial rounding detecting circuit. Therefore, a rounding detection signal which is outputted from the rounding detection signal output circuit is transferred to a rounding process circuit in which a rounding process is carried out at high speed. Thus, it is possible to contribute to improvement of the operation speed of a floating-point calculating circuit.

Also, the size of an active element of the partial rounding detecting circuit corresponding to a partial shift circuit with a relatively large partial shift quantity is set to be larger than the size of an active element of the partial rounding detecting circuit corresponding to the partial shift circuit with a relatively small partial shift quantity. Therefore, the reduction in size of the whole rounding detecting circuit can be achieved, while attempting to shorten an average calculation time.

[The first embodiment]

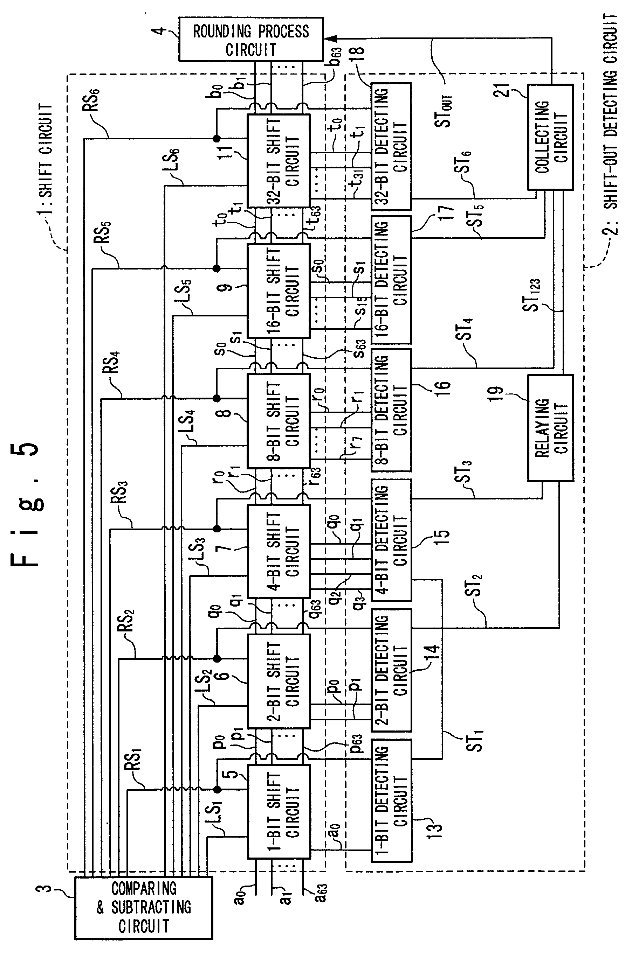

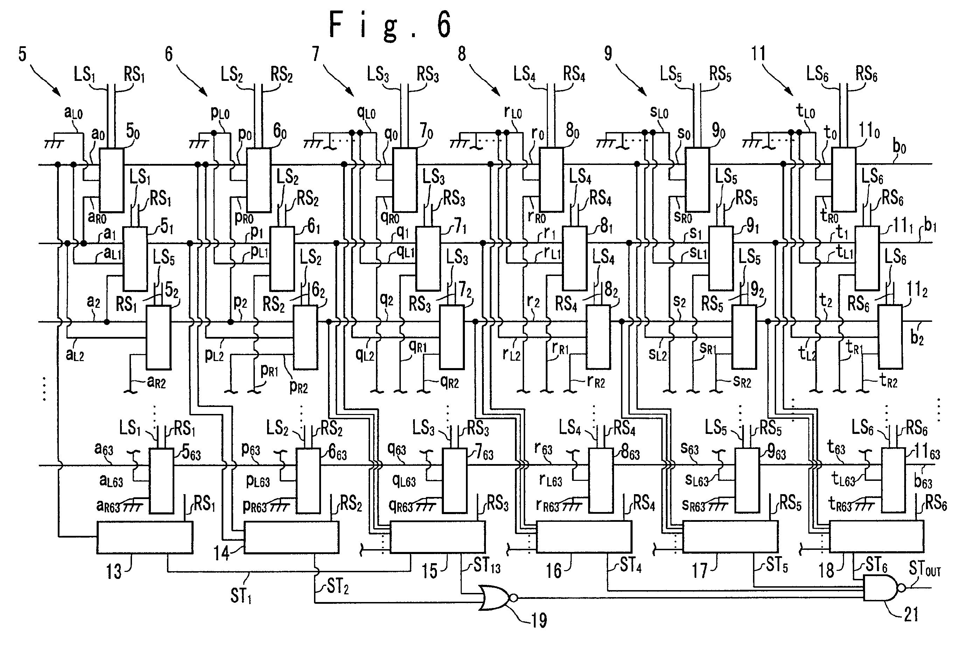

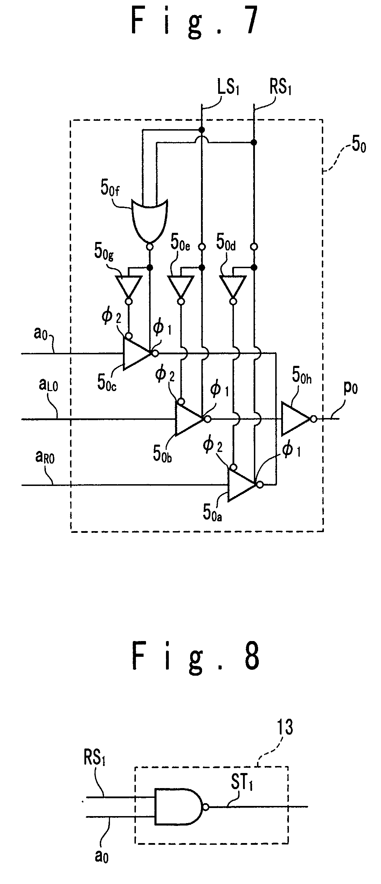

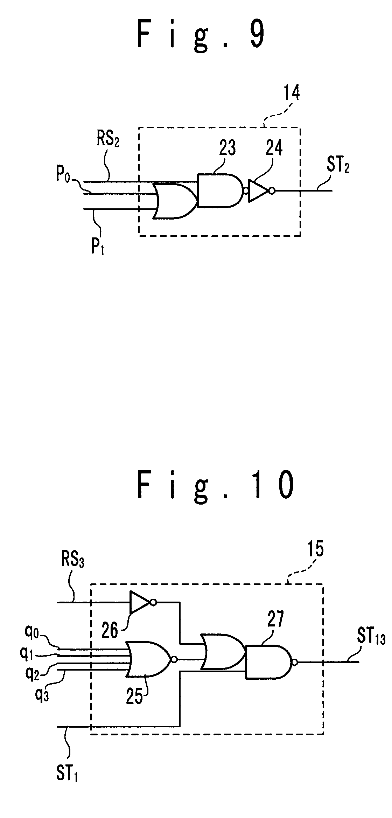

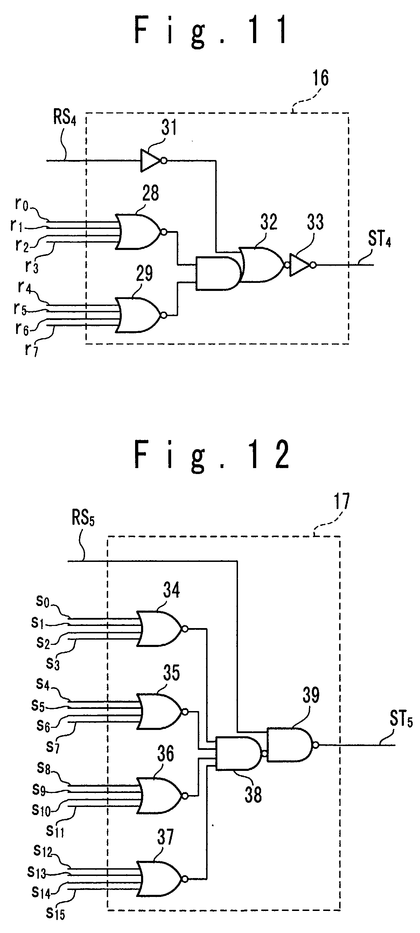

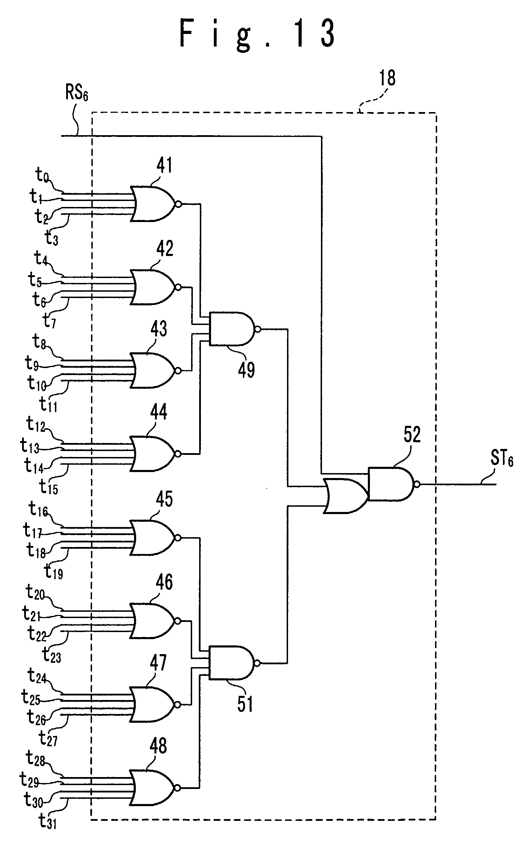

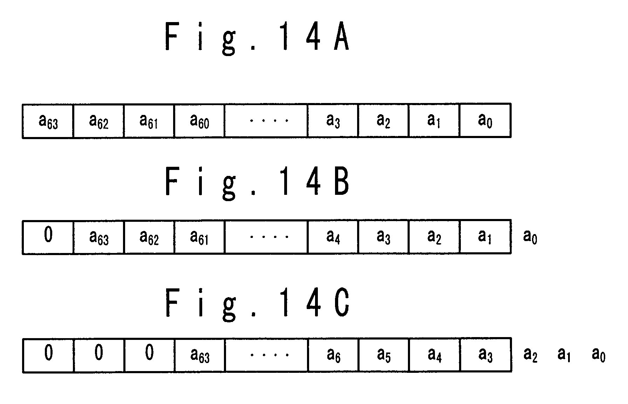

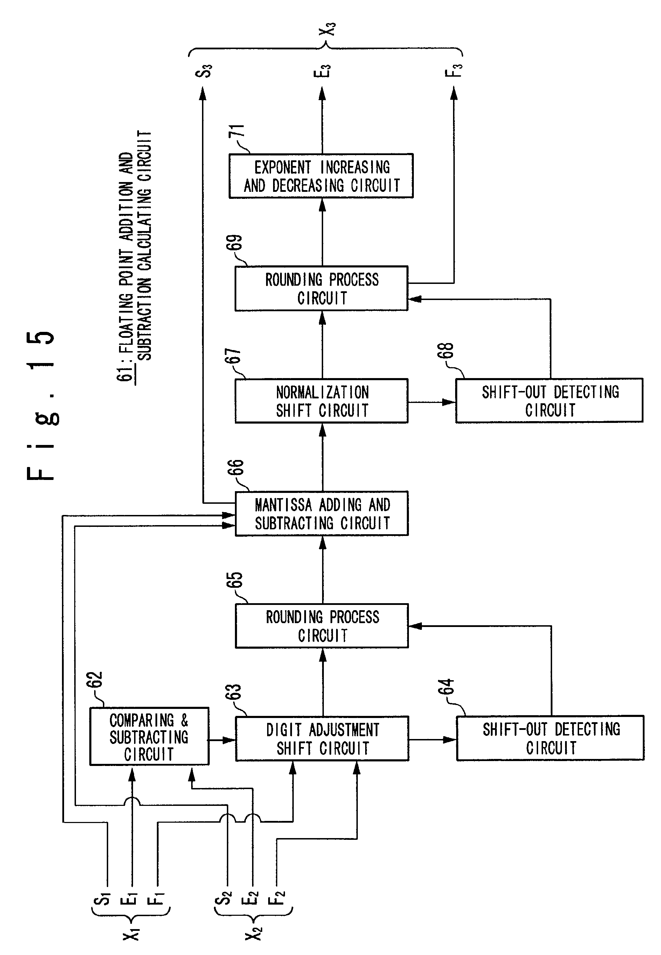

Figs. 5 and 6 are block diagrams showing circuit structures of a shift circuit according to the first embodiment of the present invention and a shift-out detecting circuit. Fig. 7 is a circuit diagram showing the circuit structure of a multiplexer circuit of the shift circuit. Fig. 8 is a circuit diagram showing the circuit structure of a 1-bit detecting circuit of the shift-out detecting circuit. Fig. 9 is a circuit diagram showing the circuit structure of a 2-bit detecting circuit of the shift-out detecting circuit. Fig. 10 is a circuit diagram showing the circuit structure of a 4-bit detecting circuit of the shift-out detecting circuit. Fig. 11 is a circuit diagram showing the circuit structure of an 8-bit detecting circuit of the shift-out detecting circuit. Fig. 12 is a circuit diagram showing the circuit structure of a 16-bit detecting circuit of the shift-out detecting circuit. Fig. 13 is a circuit diagram showing the circuit structure of a 32-bit detecting circuit of the shift-out detecting circuit. Figs. 14A to 14C are diagrams showing the operation of the shift circuit and shift-out detecting circuit. Also, Fig. 15 is a block diagram showing the circuit structure of a floating-point adding and subtracting circuit in which the shift circuit and the shift-out detecting circuit are incorporated.

As shown in Fig. 5, the shift circuit 1 and the shift-out detecting circuit (rounding detecting circuit) 2 in this example are used for a digit adjustment shifting process and a normalization shifting process in the floating-point adding and subtracting circuit which outputs the addition result (summation) of two floating-point numbers. It should be noted that the shift circuit 1 and the shift-out detecting circuit 2 connected in parallel form a composite circuit.

This shift circuit 1 is composed of a 1-bit shift circuit (partial shift circuit) 5 which is possible to shift data by 1 bit on either side in accordance with a shift quantity signal given from a comparing and subtracting circuit 3, a 2-bit shift circuit 6 which is possible to shift data by 2 bits, a 4-bit shift circuit 7 which is possible to shift data by 4 bits, a 8-bit shift circuit 8 which it is possible to shift data by 8 bits, a 16-bit shift circuit 9 which is possible to shift data by 16 bits, and a 32-bit shift circuit 11 which is possible to shift data by 32 bits.

As shown in Fig. 5 and 6, the shift circuit 1 shifts 64-bit mantissa $(a_{63}a_{62} ... a_3a_2a_1a_0)$ by an optional shift bit quantity in a range from 1 bit to 64 bits, and outputs the shift result $(b_{63}b_{62}...b_3b_2b_1b_0)$ to the rounding process circuit 4 by the combination of the above bit shift circuits.

As shown in Figs. 5 and 6, the shift-out detecting circuit 2 is composed of a 1-bit detecting circuit (partial rounding detecting circuit) 13, a 2-bit detecting circuit 6, a 4-bit detecting circuit 7, a 8-bit detecting circuit 8, a 16-bit detecting circuit 9, and a 32-bit detecting circuit 11 for detecting the shifting-out operations of "1" in the 1-bit shift circuit 5, the 2-bit shift circuit 6, the 4-bit shift circuit 7, the 8-bit shift circuit 8, the 16-bit shift circuit 9, and the 32-bit shift circuit 11, respectively. Further, the shift-out detecting circuit 2 is composed of a relaying circuit 19 for relaying the output of 2-bit detecting circuit 14 and the 4-bit detecting circuit 15, and a collecting circuit (rounding detection signal output circuit) 21 which collects the outputs of the respective bit detecting circuits, and outputs a sticky signal (rounding detection signal) STOUT to notify the shift-out of "1" as a result of the shifting process of the shift circuit 1.

The shift-out detecting circuit 2 checks the existence or non-existence of the shift-out of "1" based on the shift quantity signal given from the comparing and subtracting circuit 3 and a part of data during the shifting process outputted from the digit adjustment shift circuit 1.

In case of a digit adjustment shift, for example, the shift circuit 1 shifts (right shift) the inputted mantissa $(a_{63}a_{62}...a_3a_2a_1a_0)$ of 64 bits as a shift object into the lower bit, based on the shift quantity necessary for the digit adjustment of the mantissa of the floating-point number with the smaller exponent which is outputted from the comparing and subtracting circuit 3 which determines the larger or smaller relation of the exponents of two floating-point numbers, and outputs the shifted result $(b_{63}b_{62}...b_3b_2b_1b_0)$.

On the other hand, the shift-out detecting circuit 2 checks whether or not "1" is contained in any one of the data shift out as a result of the shifting process in parallel to the shifting process of the shift circuit 1, and sets and outputs a sticky signal STOUT of "1" to promote a rounding process determining process for selecting an optimal rounding method in the rounding process circuit 4 of the post stage, when "1" is contained.

The shift circuit 1 is a barrel shift circuit which can collectively shift a plurality of bits. As shown in Figs. 5 and 6, in the shift circuit 1, the 1-bit shift circuit (partial shift circuit) 5 shifts the inputted mantissa $(a_{63}a_{62} \cdots a_3a_2a_1a_0)$ into a right direction by one bit, when receiving the right 1-bit shift signal $RS_1$ of "1" from the comparing and subtracting circuit 3, for example. Also, the 1-bit shift circuit 5 shifts the inputted mantissa $(a_{63}a_{62} \cdots a_3a_2a_1a_0)$ into a left direction by one bit, when receiving the left 1-bit shift signal $LS_1$ of "1".

The 2-bit shift circuit 6 shifts the output data $(p_{63}p_{62}\cdots p_3p_2p_1p_0)$ of the 1-bit shift circuit 5 into a right direction by two bits, when receiving the right 2-bit shift signal $RS_2$ of "1". Also, the 2-bit shift circuit 6 shifts the output data $(p_{63}p_{62}\cdots p_3p_2p_1p_0)$ of the 1-bit shift circuit 5 into a left direction by two bits, when receiving the left 2-bit shift signal $LS_2$ of "1".

The 4-bit shift circuit 7 shifts the output data $(q_{63}q_{62}\cdots q_3q_2q_1q_0)$ of the 2-bit shift circuit 6 into a right direction by four bits, when receiving the right 4-bit shift signal $RS_3$ of "1". Also, 4-bit shift circuit 7 shifts the output data $(q_{63}q_{62}\cdots q_3q_2q_1q_0)$ of the 2-bit shift circuit 6 into a left direction by four bits, when receiving the left 4-bit shift signal $LS_3$ of "1".

The 8-bit shift circuit 8 shifts the output data $(r_{63}r_{62}\cdots r_3r_2r_1r_0)$ of the 4-bit shift circuit 7 into a right direction by 8 bits, when receiving a right 8-bit shift signal $RS_4$ of "1". Also, 8-bit shift circuit 8 shifts the output data $(r_{63}r_{62}\cdots r_3r_2r_1r_0)$ of the 4-bit shift circuit 7 into a left direction by 8 bits, when receiving a left 8-bit shift signal $LS_4$ of "1".

The 16-bit shift circuit 9 shifts the output data $(s_{63}s_{62}\cdots s_3s_2s_1s_0)$ of the 8-bit shift circuit 8 into a right direction by 16 bits, when receiving the right 16-bit shift signal $RS_5$ of "1". Also, the 16-bit shift circuit 9 shifts the output data $(s_{63}s_{62}\cdots s_3s_2s_1s_0)$ of the 8-bit shift circuit 8 into a left direction by 16 bits when receiving the left 16-bit shift signal $LS_5$ of "1".

The 32-bit shift circuit 11 shifts the output data $(t_{63}t_{62}\cdots t_3t_2t_1t_0)$ of the 16-bit shift circuit 9 into a right direction by 32 bits, when receiving the right 32-bit shift signal $RS_6$ of "1". Also, the 32-bit shift circuit 11 shifts the output data $(t_{63}t_{62}\cdots t_3t_2t_1t_0)$ of the 16-bit shift circuit 9 into a left direction by 32 bits, when receiving the left 32-bit shift signal $LS_6$ of "1".

The shift circuit 1 is possible to shift data into the upper or lower bit direction by an optimal shift quantity from 1 bit to 64 bits by the combination of the above shift signals.

As shown in Fig. 6, the 1-bit shift circuit 5 inputs a mantissa $(a_{63}a_{62} \cdots a_3a_2a_1a_0)$, Of the right shifted data $(aR_{63}aR_{62}\cdots aR_3aR_2aR_1aR_0)$ as 1-bit higher data obtained by shifting the mantissa $(a_{63}a_{62} \cdots a_3a_2a_1a_0)$ into a right direction by one bit, and the left shifted data $(aL_{63}aL_{62}\cdots aL_3aL_2aL_1aL_0)$ as 1-bit lower data obtained by shifting the mantissa $(a_{63}a_{62} \cdots a_3a_2a_1a_0)$ into a left direction by one bit. When there is not the 1-bit higher data or the 1-bit lower data, data of "0" is inputted.

As shown in Fig. 6, the 1-bit shift circuit 5 inputs the above data and has 64 multiplexer circuits $5_0$, $5_1$, $5_2$, ..., $5_{62}$, $5_{63}$ corresponding to the number of bits of

the mantissa ($a_{63}a_{62} \cdots a_3a_2a_1a_0$).

As shown in Fig. 6, the multiplexer circuits $5_0$, ($5_1$, $5_2$, ..., $5_{62}$, $5_{63}$) selects and outputs one of data of a corresponding bit of the inputted mantissa ($a_{63}a_{62} \cdots a_3a_2a_1a_0$), data of the corresponding bit of the right shifted data ($aR_{63}aR_{62} \cdots aR_3aR_2aR_1aR_0$), and data of the corresponding bit of the left shifted data ($aL_{63}aL_{62} \cdots aL_3aL_2aL_1aL_0$) in accordance with the states of the right 1-bit shift signal $RS_1$ and the left 1-bit shift signal $LS_1$ which are inputted as a control signal.

In the same way, the 2-bit shift circuit 6, the 4-bit shift circuit 7, the 8-bit shift circuit 8, the 16-bit shift circuit 9, and the 32-bit shift circuit 11 have 64 multiplexer circuits $6_0$, $6_1$, $6_2$, ..., $6_{63}$, multiplexer circuits $7_0$, $7_1$, $7_2$, ..., $7_{63}$, multiplexer circuits $8_0$, $8_1$, $8_2$, ..., $8_{63}$, multiplexer circuits $9_0$, $9_1$, $9_2$, ..., $9_{63}$, and multiplexer circuits $11_0$, $11_1$, $11_2$, ..., $11_{63}$, respectively.

Here, as shown in Fig. 6, the 2-bit shift circuit 6 inputs the output data ($p_{63}p_{62} \cdots p_3p_2p_1p_0$) of the 1-bit shift circuit 5, the right shifted data ($pR_{63}pR_{62} \cdots pR_3pR_2pR_1pR_0$) as 2-bit higher data by shifting the output data ($p_{63}p_{62} \cdots p_3p_2p_1p_0$) into a right direction by two bits, and the left shifted data ($pL_{63}pL_{62} \cdots pL_3pL_2pL_1pL_0$) as 2-bit lower data obtained by shifting the output data ($p_{63}p_{62} \cdots p_3p_2p_1p_0$) into a left direction by two bit. When there is not the 2-bit higher or the 2-bit lower data, "0" is inputted.

The above data is inputted to each of the multiplexer circuits $6_0$ ($6_1$, $6_2$, $6_3$, ..., $6_{62}$, $6_{63}$).

Similarly, the 4-bit shift circuit 7 inputs the output data ($q_{63}q_{62} \cdots q_3q_2q_1q_0$) of the 2-bit shift circuit 6, the right shifted data ($qR_{63}qR_{62} \cdots qR_3qR_2qR_1qR_0$) obtained by shifting the output data ($q_{63}q_{62} \cdots q_3q_2q_1q_0$) into a right direction by four bits, and the left shifted data ($qL_{63}qL_{62} \cdots qL_3qL_2qL_1qL_0$) obtained by shifting the output data ($q_{63}q_{62} \cdots q_3q_2q_1q_0$) into a left direction by four bit.

Also, the 8-bit shift circuit 8 inputs the output data ($r_{63}r_{62} \cdots r_3r_2r_1r_0$) of the 4-bit shift circuit 7, the right shifted data ($rR_{63}rR_{62} \cdots rR_3rR_2rR_1rR_0$) obtained by shifting the output data ($r_{63}r_{62} \cdots r_3r_2r_1r_0$) into a right direction by 8 bits, and the left shifted data ($rL_{63}rL_{62} \cdots rL_3rL_2rL_1rL_0$) obtained by shifting the output data ($r_{63}r_{62} \cdots r_3r_2r_1r_0$) into a left direction by 8 bits.

Also, the 16-bit shift circuit 9 inputs the output data ($s_{63}s_{62} \cdots s_3s_2s_1s_0$) from the 8-bit shift circuit 8, the right shifted data ($sR_{63}sR_{62} \cdots sR_3sR_2sR_1sR_0$) obtained by shifting the output data ($s_{63}s_{62} \cdots s_3s_2s_1s_0$) into a right direction by 16 bits, and the left shifted data ($sL_{63}sL_{62} \cdots sL_3sL_2sL_1sL_0$) obtained by shifting the output data ($s_{63}s_{62} \cdots s_3s_2s_1s_0$) into a left direction by 16 bits.

Also, the 32-bit shift circuit 11 inputs the output data ($t_{63}t_{62} \cdots t_3t_2t_1t_0$) of the 16-bit shift circuit 9, the right shifted data ($tR_{63}tR_{62} \cdots tR_3tR_2tR_1tR_0$) obtained by shifting the output data ($t_{63}t_{62} \cdots t_3t_2t_1t_0$) into a right direction by 32 bits, and the left shifted data ($tL_{63}tL_{62} \cdots tL_3tL_2tL_1tL_0$) obtained by shifting the output data ($t_{63}t_{62} \cdots t_3t_2t_1t_0$) into a left direction by 32 bits.

As shown in Fig. 7, the multiplexer circuit $5_0$ is composed of clock inverter circuits $5_0a$, $5_0b$, and $5_0c$, inverter circuits $5_0d$, $5_0e$, $5_0g$, $5_0h$ and a NOR circuit $5_0f$.

According to the states ("1" or "0") of the control signals inputted to two control terminals $\phi_1$ and $\phi_2$, the clock inverter circuit $5_0a$, $5_0b$, and $5_0c$ become a conductive state to invert and outputs an input signal, or becomes a high impedance state (blocking-off state) to prevent the passage of the input signal.

The inverter circuit $5_0d$ receives and inverts the right 1-bit shift signal $RS_1$ and gives the inverted signal to the control terminal $\phi_2$ of the clock inverter circuit $5_0a$. The Inverter circuit $5_0e$ receives and inverts the left 1-bit shift signal $LS_1$ and'gives the inverted signal to the control terminal $\phi_2$ of the clock inverter circuit $5_0b$.

The NOR circuit $5_0f$ receives the right 1-bit shift signal $RS_1$ and the left 1-bit shift signal $LS_1$, and outputs a non-selection signal of "1" only when time both of right 1-bit shift signal $RS_1$ and left 1-bit shift signal $LS_1$ have the state of "0".

The inverter circuit $5_0g$ receives and inverts the output signal of the NOR circuit $5_0f$ and gives the inverted signal to the control terminal $\phi_2$ of the clock inverter circuit $5_0c$. The inverter circuit $5_0h$ inverts and outputs the output signals from the clock inverter circuit $5_0a$, the clock inverter circuit $5_0b$ or the clock inverter circuit $5_0c$.

In the clock inverter circuit $5_0a$, $5_0b$, and $5_0c$, a control signal obtained by inverting the control signal inputted to the control terminal $\phi_1$ is supplied to the control terminal $\phi_2$.

For example, in the clock inverter circuit $5_0a$, the right 1-bit shift signal $RS_1$ of the "1" is supplied to the control terminal $\phi_1$ as the control signal. When the signal of "0" is supplied to the control terminal $\phi_2$, the least significant bit data $aR_0$ of the right shifted data ($aR_{63}aR_{62} \cdots aR_3aR_2aR_1aR_0$) is inverted and is outputted from the clock inverter circuit $5_0a$. At this time, the clock inverter circuits $5_0b$ and $5_0c$ are in the blocking-off state and the least significant bit data $aR_0$ is outputted from the multiplexer circuit $5_0$.

In the same way, when the left 1-bit shift signal $LS_1$ of "1" is supplied to the control terminal $\phi_1$ of the clock inverter circuit $5_0b$, the least significant bit data $aL_0$ of the left shifted data ($aL_{63}aL_{62} \cdots aL_3aL_2aL_1aL_0$) is outputted from the multiplexer circuit $5_0$.

Also, when the non-selection signal of "1" is inputted to the control terminal $\phi_1$ of the clock inverter circuit $5_0c$, the least significant bit $a_0$ of the mantissa ($a_{63}a_{62} \cdots a_3a_2a_1a_0$) is outputted from the multiplexer circuit $5_0$ as it is.

Also, the multiplexer circuits $5_1$, $5_2$, ..., $5_{63}$ have the same circuit structure as the multiplexer circuit $5_0$. In Fig. 7, they are shown by adding subscripts 0, 1, 2, ..., 63. Moreover the multiplexer circuits 6, 7, ..., 11 have the same circuit structure as the multiplexer circuit 5, except for the shift signal as the input data and the control signal. In Fig. 7, the numbers $5_0$ is changed to $6_0$, $6_1$, ..., and $11_{63}$, and also $6_0a$ is shown in place of

$5_0a$, of example.

The multiplexer circuit 51 outputs the second bit data $aR_1$ of right shifted data ($aR_{63}aR_{62}$ ··· $aR_3aR_2aR_1aR_0$) when the right 1-bit shift signal $RS_1$ is "1", outputs the second bit data $aL_1$ of the left shifted data ($aL_{63}aL_{62}$ ··· $aL_3aL_2aL_1aL_0$), when the left 1-bit shift signal $LS_1$ is "1", and outputs the second bit data $a_1$ of the mantissa ($a_{63}a_{62}$ ··· $a_3a_2a_1a_0$), when both of right 1-bit shift signal $RS_1$ and left 1-bit shift signal $LS_1$ are "0".

Similarly, the multiplexer circuits $5_2$, ... , $5_{62}$, and $5_{63}$ operate in the same way.

In this way, the 1-bit shift circuit 5 selects one of the mantissa ($a_{63}a_{62}$ ··· $a_3a_2a_1a_0$), the right shifted data ($aR_{63}aR_{62}$ ··· $aR_3aR_2aR_1aR_0$) and the left shifted data ($aL_{63}aL_{62}$ ··· $aL_3aL_2aL_1aL_0$) in accordance with the right 1-bit shift signal $RS_1$ and the left 1-bit shift signal $LS_1$.

In the same way, the 2-bit shift circuit 6 selects one of the output data ($p_{63}p_{62}$ ··· $p_3p_2p_1p_0$), the right shifted data ($pR_{63}pR_{62}$ ··· $pR_3pR_2pR_1pR_0$) and the left shifted data ($pL_{63}pL_{62}$ ··· $pL_3pL_2pL_1pL_0$) in accordance with the right 2-bit shift signal $RS_2$ and the left 2-bit shift signal $LS_2$.

Hereinafter, the 1-bit shift circuit 5, the 2-bit shift circuit 6, the 4-bit shift circuit 7, the 8-bit shift circuit 8, the 16-bit shift circuit 9, and the 32-bit shift circuit 11 operate in the same way. The shift circuit 1 shifts the mantissa ($a_{63}a_{62}$ ··· $a_3a_2a_1a_0$) by an optional shift quantity from 1 bit to 64 bits.

As shown in Figs. 5 and 6, in the shift-out detecting circuit 2, the 1-bit detecting circuit (partial rounding detecting circuit) 13 detects that "1" is shifted out as the result of the shifting process by the 1-bit shift circuit 5.

The 2-bit detecting circuit 14 detects that "1" is shifted out as the result of the shifting process by the 2-bit shift circuit 6. The 4-bit detecting circuit 15 detects that "1" is shifted out as the result of the shifting process by the 4-bit shift circuit 7. Also, the detection result by the 1-bit detecting circuit 13 is inputted and the signal which contains this detection result is outputted.

The 8-bit detecting circuit 16 detects that "1" is shifted out as the result of the shifting process by the 8-bit shift circuit 8. The 16-bit detecting circuit 17 detects that "1" is shifted out as the result of the shifting process by the 16-bit shift circuit 9. The 32-bit detecting circuit 18 detects that "1" is shifted out as the result of the shifting process by the 32-bit shift circuit 11.

The relaying circuit 19 inputs the detection results of the 2-bit detecting circuit 14 and 4-bit detecting circuit 15, and outputs the signal which contains the detection results of the 1-bit shift circuit 5, 2-bit shift circuit 6, and 4-bit shift circuit 7.

The collecting circuit (rounding detection signal outputting circuit) 21 inputs the detection 'results of the relaying circuit 19, 8-bit detecting circuit 16, 16-bit detecting circuit 17 and 32-bit detecting circuit 18, and outputs a sticky signal STOUT of "1", when "1" is shifted out in either of does either of 1-bit shift circuit 5, 2-bit shift circuit 6, 4-bit shift circuit 7, 8-bit shift circuit 8, 16-bit shift circuit 9, and 32-bit shift circuit of circuit 11.

As shown in Fig. 8, the 1-bit detecting circuit 13 is composed of a 2-input NAND circuit. The 1-bit detecting circuit 13 inputs the right 1-bit shift signal $RS_1$ and least significant bit data $a_0$, and outputs a sticky signal $ST_1$ to notify to processing circuit 4 that "1" is contained in the shifted out data in case of both being "1".

That is, the 1-bit detecting circuit 13 outputs the sticky signal $ST_1$ of "0", when the right 1-bit shift signal $RS_1$ is "1" and a 1-bit right shift is carried out by the 1-bit shift circuit 5, and the least significant bit data $a_0$ of the mantissa ($a_{63}a_{62}$ ··· $a_3a_2a_1a_0$) supplied to the 1-bit shift circuit 5 is "1".

As shown in Fig. 9, the 2-bit detecting circuit 14 has a 2-input OR 2-input NAND circuit 23 for carrying out the NAND logical operation of the OR output of the least significant bit data $p_0$ and the data the second bit $p1$ and right 2-bit shift signal $RS_2$ and an inverter circuit 24 which inverts the output of 2-input OR 2-input NAND circuit 23.

That is, the 2-bit detecting circuit 14 outputs the sticky signal $ST_2$ to notify that "1" is contained in the shifted-out data, when the right 2-bit shift signal $RS_2$ is "1", and the 2-bit right shift is carried out by the 2-bit shift circuit 6 and either of the least significant bit data $p_0$ and the second bit $p1$ of the output data ($p_{63}p_{62}$ ··· $p_3p_2p_1p_0$) supplied to the 2-bit shift circuit 6.

As shown in Fig. 10, the 4-bit detecting circuit 15 is composed of a 4-input NOR circuit 25 which carries out the NOR logical operation of the data from the least significant bit data $q_0$ to the fourth bit $q_3$, an inverter circuit 26 which inverts and outputs the right 4-bit shift signal $RS_3$, and a 2-input OR 2-input NAND circuit 27 which carries out the NAND logical operation of the OR output of the output of inverter circuit 26 and the output of the 4-input NOR circuit 25 and the sticky signal $ST_1$.

That is, the 4-bit detecting circuit 15 outputs the sticky signal $ST_{13}$ of "1" to notify that "1" is contained in the shifted out data, when the right 4-bit shift signal $RS_3$ is "1", and the 4-bit right shift is carried out by the 4-bit shift circuit 7, and at least one bit of the data from the least significant bit data $q_0$ to the fourth bit $q_3$ of the in the output data ($q_{63}q_{62}$ ··· $q_3q_2q_1q_0$) supplied to the 4-bit shift circuit 7 is "1" or the sticky signal $ST_1$ is "0".

As shown in Fig. 11, the 8-bit detecting circuit 16 is composed of a 4-input NOR circuit 28 which carries out the NOR logical operation of bits from the least significant bit $r_0$ to the fourth bit $r_3$, a 4-input NOR circuit 29 which carries out the NOR logical operation of bits from the fifth bit $r_4$ to the eight bit $r_7$, an inverter circuit 31 which inverts and outputs the right 8-bit shift signal $RS_4$, a 2-input AND 2-input NOR circuit 32 which carries out and outputs the NOR logical operation of the AND output of the 4-input NOR circuit 28 and the 4-input NOR circuit 29 and the output of the inverter circuit 31, and an inverter circuit 33 which inverts and outputs the 2-input NAND 2-input NOR circuit 32.

That is, the 8-bit detecting circuit 16 outputs the sticky signal $ST_4$ of "0" to notify that "1" is contained in the shifted-out data, when the right 8-bit shift signal $RS_4$ is "1", and an 8-bit right shift is carried out by the 8-bit shift circuit 8, at least one of bits from the least significant bit data $r_0$ to the eighth bit $r_7$ of the output data $(r_{63}r_{62} \cdots r_3r_2r_1r_0)$ supplied to the 8-bit shift circuit 8 is "1".

As shown in Fig. 12, the 16-bit detecting circuit 17 is composed of a 4-input NOR circuit 34 which carries out the NOR logical operation of the bits from the least significant bit data $s_0$ to the fourth bit $s_3$, a 4-input NOR circuit 35 which carries out the NOR logical operation bits from the fifth bit $s_4$ to the eighth bit $s_7$, a 4-input NOR circuit 36 which carries out the NOR logical operation of the bits from the ninth bit $s_8$ to the twelfth bit $s_{11}$, a 4-input NOR circuit 37 which carries out the NOR logical operation of bits from the thirteenth bit $s_{12}$ to the sixteenth bit $s_{15}$, a 4-input NAND circuit 38 which carries out the NAND logical operation of the outputs of 4-input NOR circuits 34, 35, 36, 37, and a 4-input NAND circuit 39 which carries out the NAND logical operation of the outputs of right 16-bit shift signal $RS_5$ and the 4-input NAND circuit 38.

That is, the 16-bit detecting circuit 17 outputs the sticky signal $ST_5$ of "0" to notify that "1" is contained in the shifted-out data, when the right 16-bit shift signal $RS_5$ is "1", and the 16-bit right shift is carried out by the 16-bit shift circuit 9, and at least one of bits from the least significant bit data $s_0$ the sixteenth bit $s_{15}$ of the output data $(s_{63}s_{62} \cdots s_3s_2s_1s_0)$ supplied to 16-bit shift circuit 9 is "1".

As shown in Fig. 13, the 32-bit detecting circuit 18 is composed of 4-input NOR circuits 41, 42, ..., and 48, 4-input NAND circuits 49 and 51 and a 2-input OR 2-input NAND circuit 52.

The 4-input NOR circuit 41 carries out the NOR logical operation of bits from the least significant bit data $t_0$ to the fourth bit $t_3$. The 4-input NOR circuit 42 carries out the NOR logical operation of bits from the fifth bit $t_4$ to the eighth bit $t_7$. The 4-input NOR circuit 43 carries out the NOR logical operation of bits from the ninth bit $t_8$ to the twelfth bit $t_{11}$. The 4-input NOR circuit 44 carries out the NOR logical operation of bits from the thirteenth bit $t_{12}$ to the sixteenth bit $t_{15}$. The 4-input NOR circuit 45 carries out the NOR logical operation of bits from the seventeenth bit $t_{16}$ to the twentieth bit $t_{19}$. The 4-input NOR circuit 46 carries out the NOR logical operation of bits from the twenty-first bit $t_{20}$ to the twenty-fourth bit $t_{23}$. The 4-input NOR circuit 47 carries out the NOR logical operation of bits from the twenty-fifth bit $t_{24}$ to the twenty-eighth bit $t_{27}$. The 4-input NOR circuit 48 carries out the NOR logical operation of bits from the twenty-ninth bit $t_{28}$ to the thirty-second bit $t_{31}$.

The 4-input NAND circuit 49 carries out the NAND logical operation of the outputs of 4-input NOR circuits 41, 42, 43, and 44. The 4-input NAND circuit 51 carries out the NAND logical operation of the outputs of the 4-input NOR circuits 45, 46, 47, and 48. The 2-input OR 2-input NAND circuit 52 carries out the NAND logical operation of the OR logical operation of the output of the 4-input NAND circuit 49 and the output of the 4-input NAND circuit 51 and the right 32-bit shift signal $RS_6$.

That is, as shown in Fig. 13, the 32-bit detecting circuit 18 outputs the sticky signal $ST_6$ of "0" to notify that "1" is contained in the shifted-out data, when the right 32-bit shift signal $RS_6$ is "1", and the 32-bit right shift is carried out by the 32-bit shift circuit 11, and at least one of bits from the least significant bit data $t_0$ to the thirty-second bit $t_{31}$ of the output data $(t_{63}t_{62} \cdots t_3t_2t_1t_0)$ supplied to the 32-bit shift circuit 11 is "1".

As shown in Fig. 6, the relaying circuit 19 is composed of a NOR circuit which carries out the NOR logical operation of the sticky signal $ST_2$ and the sticky signal $ST_3$. The relaying circuit 19 outputs a signal $ST_{123}$ of "0", when one of the sticky signal $ST_2$ and the sticky signal $ST_{13}$ is "1".

As shown in Fig. 6, the collecting circuit 21 is composed of a 4-input NAND circuit which carries out the NAND logical operation of the output of the relaying circuit 19, and the sticky signals $ST_4$, $ST_5$ and $ST_6$ and outputs a sticky signal ST. When at least one of the output signal $ST_{123}$ of the relaying circuit 19, and the sticky signals $ST_4$, $ST_5$ and $ST_6$ is "0", the collecting circuit 21 outputs the sticky signal STOUT of "1".

It should be noted that in this example, although a delay is added to the signal output from collecting circuit 21 rather than the detecting circuit in the front-stage is connected directly with the concentration output circuit 21 of the last stage, when "there is a shift-out of "1"" is detected in the previous stage (e.g., by the 1-bit detecting circuit 13), the output signal is passed through the relaying circuit. Also, because the determination of "not being in the shift-out of "1"" is accomplished after the output from the 32-bit detecting circuit 18 is determined, the sticky signal is outputted to match to the timing of the determination of the 32-bit detecting circuit 18 by passing through the relaying circuit 19.

Thus, in this example, the number of logic stages for each sticky signal to be outputted from the collecting circuit 21 is set to 4, to equalize the time required for the shift-out detecting process regardless of the shift quantity.

Further, the size of a transistor of the logic circuit of the detecting circuit at the previous stage (for example, 1-bit detecting circuit 13) is made small compared with that of a transistor of the detecting circuit at the post stage (for example, 32-bit detecting circuit 18) to reduce the whole size while the calculation time is adjusted to the calculation time in the detecting circuit at the post stage. Also, in case of a composite gate, the size of the transistor is made relatively larger to reduce the calculation time.

Next, the operations of the shift circuit 1 and shift-out detecting circuit 2 in this example will be described.

In case of the 3-bit right shift, for example, all of the operation will be described when the least significant bit $a_0$, the second bit a1 and the third bit $a_2$ of the mantissa ($a_{63}a_{62} \cdots a_3a_2a_1a_0$) are "1".

As shown in Figs. 5, 6 and 14A, first, the mantissa ($a_{63}a_{62} \cdots a_3a_2a_1a_0$) is supplied to the shift circuit 1.

The comparing and subtracting circuit 3 set only the right 1-bit shift signal $RS_1$ and right 2-bit shift signal $RS_2$ to "1", and outputs to the digit adjustment shift circuit 1 and shift-out detecting circuit 2.

When the 1-bit shift circuit 5 receives the right 1-bit shift signal $RS_1$ of "1", only the clock inverter circuit $5_0a$ is set to the conductive state in the multiplexer circuit $5_0$, and the least significant bit data $aR_0$ of the right shifted data ($aR_{63}aR_{62} \cdots aR_3aR_2aR_1aR_0$) is inverted and is outputted from the clock inverter circuit $5_0a$. Moreover, it is again inverted by the inverter circuit $5_0h$ to be returned to the least significant bit $aR_0$, and then is sent out to the multiplexer circuit $6_0$ of the 2-bit shift circuit 6.

In the same way, in the multiplexer circuits $5_1$, $5_2$, ..., $5_{63}$, the corresponding bits of the right shifted data ($aR_{63}aR_{62} \cdots aR_3aR_2aR_1aR_0$) are selected, and the output data ($p_{63}p_{62} \cdots p_3p_2p_1p_0$) obtained by shifting the right shifted data ($aR_{63}aR_{62} \cdots aR_3aR_2aR_1aR_0$) (= ($0a_{63}a_{62}\cdots a_3a_2a_1a_0$)) in a right direction by one bit is sent out to the 2-bit shift circuit 6, as shown in Fig. 14B.

When the 2-bit shift circuit 6 receives the right 2-bit shift signal $RS_2$ of "1", only the clock inverter circuit $6_0a$ is set to the conductive state in the multiplexer circuit $6_0$. The least significant bit $pR_0$ of right shifted data ($pR_{63}pR_{62} \cdots pR_3pR_2pR_1pR_0$) is inverted and is outputted from the clock inverter circuit $6_0a$, and then it is again inverted by the inverter circuit $6_0h$ to be returned to the least significant bit $pR_0$. Thereafter, the bit $pR_0$ is sent out to the multiplexer circuit $7_0$ of the 4-bit shift circuit 7.

In the same way, in the multiplexer circuits $6_1$, $6_2$, ..., $6_{63}$, the corresponding bit of the right shifted data ($pR_{63}pR_{62} \cdots pR_3pR_2pR_1pR_0$) is selected and the output data ($q_{63}q_{62} \cdots q_3q_2q_1q_0$) by shifting the right shifted ($pR_{63}pR_{62} \cdots pR_3pR_2pR_1pR_0$) (=($000(a_{63}a_{62} \cdots a_3a_2a_1a_0$)) in a right direction by 3 bits is sent out to 4-bit shift circuit 7, as shown in Fig. 14C.

In the 4-bit shift circuit 7, only the clock inverter circuit $7_0c$ is set to the conductive state in the multiplexer circuit $7_0$. The least significant bit $q_0$ of the output ($q_{63}q_{62} \cdots q_3q_2q_1q_0$) is inverted and is outputted from the clock inverter circuit $7_0a$, and then it is again inverted by the inverter circuit $7_0h$ to be returned to the least significant bit $q_0$. Thereafter, it is sent out to the multiplexer circuit 80 of the 8-bit shift circuit 8.

In the same way in the multiplexer circuits $7_1$, $7_2$, ..., $7_{63}$, the corresponding bit of the output ($q_{63}q_{62} \cdots q_3q_2q_1q_0$) is selected, and the outputs data ($q_{63}q_{62} \cdots q_3q_2q_1q_0$) is sent out to the 8-bit shift circuit 8 as the output data ($r_{63}r_{62} \cdots r_3r_2r_1r_0$).

In the 8-bit shift circuit 8, 16-bit shift circuit 9 and 32-bit shift circuit 11, only the clock inverter circuit $8_0c$ ($9_0c$, $11_0c$) is set to the conductive state in the mul-

tiplexer circuit $8_0$ ($9_0$, $11_0$), for example. Therefore, the relation (($r_{63}r_{62} \cdots r_3r_2r_1r_0$) = ($s_{63}s_{62} \cdots s_3s_2s_1s_0$) = ($t_{63}t_{62} \cdots t_3t_2t_1t_0$)) is satisfied. The output data ($b_{63}b_{62} \cdots b_3b_2b_1b_0$) from the 32-bit shift circuit 11 becomes equal to the data obtained by shifting the mantissa ($a_{63}a_{62} \cdots a_3a_2a_1a_0$) supplied to the digit adjustment shift circuit 1 in the right direction by 3 bits.

On the other hand, in the shift-out detecting circuit 4, the 1-bit detecting circuit 13 outputs the sticky signal ST1 of "0", when the right 1-bit shift signal RS1 and the least significant bit $a_0$ of the mantissa ($a_{63}a_{62} \cdots a_3a_2a_1a_0$) are all "1", as shown in Figs. 5 and 6. In this example, the sticky signal $ST_1$ of "0" is sent out to the 4-bit detecting circuit 15 because ($a_0$=1). Also, the 2-bit detecting circuit 14 outputs the sticky signal $ST_2$ of "1", when the right 2-bit shift signal $RS_2$ is "1", and at least one of the second bit p1 and the least significant bit $p_0$ of the output data ($p_{63}p_{62} \cdots p_3p_2p_1p_0$) is "1".

In this example, because (($p_{63}p_{62} \cdots p_3p_2p_1p_0$) = ($aR_{63}aR_{62} \cdots aR_3aR_2aR_1aR_0$) = ($0a_{63}a_{62} \cdots a_3a_2a_1a_0$), and (a1=$a_2$=1), (p1=$p_0$=1). Therefore, the 2-bit detecting circuit 14 sends out the sticky signal $ST_2$ of the "1" state to the relaying circuit 19.

The 4-bit detecting circuit 15 outputs the sticky signal $ST_{13}$ of "1", when the right 4-bit shift signal $RS_3$ is "1", and at least one of bits from the least significant bit $q_0$ to the fourth bit $q_3$ of the output data ($q_{63}q_{62} \cdots q_3q_2q_1q_0$) supplied to the 4-bit shift circuit 7 is "1" or the sticky signal $ST_1$ is "0".

In this example, the sticky signal $ST_{13}$ of "1" is outputted because the right 4-bit shift signal $RS_3$ is "0" but the sticky signal ST1 is "0".

The relay output circuit 19 outputs the sticky signal $ST_{123}$ of "0", when at least one of the sticky signal $ST_2$ and the sticky signal $ST_3$ is "1".

In this example, because the sticky signal $ST_2$ and the sticky signal $ST_{13}$ are both "1", the output signal $ST_{123}$ of the "0" state is sent out to the output circuit 21.

The 8-bit detecting circuit 16 outputs the sticky signal $ST_4$ of "0", when the right 8-bit shift signal RS4 is "1" and at least one of bits from the least significant bit $r_0$ to the eighth bit r7 of the output data ($r_{63}r_{62} \cdots r_3r_2r_1r_0$) is "1".

Because the right 8-bit shift signal RS4 is "1" in this example, the sticky signal $ST_4$ of the "1" state is sent out to the collecting circuit 21.

The 16-bit detecting circuit 17 outputs the sticky signal $ST_5$ of "0", when the right 16-bit shift signal $RS_5$ is "1" and at least one of bits from the least significant bit $s_0$ to the sixteenth bit $s_{15}$ of the output data ($s_{63}s_{62} \cdots s_3s_2s_1s_0$) is "1".

In this example, because the right 16-bit shift signal $RS_5$ is "0", the sticky signal $ST_5$ of the "1" state is sent out to the output circuit 21.

The 32-bit detecting circuit 18 outputs the sticky signal $ST_6$ of "0", when the right 32-bit shift signal $RS_6$ is "1" and at least one of bits from the least significant bit $t_0$ to the thirty-second bit $t_{31}$ of the output data

$(t_{63}t_{62} \cdots t_3t_2t_1t_0)$ is "1".

In this example, because the right 32-bit shift signal $RS_6$ is "0", the sticky signal $ST_6$ of the "1" state is sent out to the collecting circuit 21.

The collecting circuit 21 outputs the sticky signal STOUT of "1", when at least one of the output signal $ST_{123}$ from the relaying circuit 19, the sticky signals $ST_4$, $ST_5$, $ST_6$ is "0".

In this example, because the output signal $ST_{123}$ from the relaying circuit 19 is "0", the sticky signal STOUT of the "1" state is sent out to the rounding process circuit 4 to indicate that the shift-out of "1" is detected by the shift circuit 1 in the shifting process.

It should be noted that the shifting process to the direction of the most significant bit (left shift) is carried out like the right shift mentioned above.

The left shifting process is carried out in a case of the normalization shift when the integer part becomes "0" as the result of a subtracting process, and in case of the digit adjusting process in which data is left-shifted by a predetermined bit quantity and outputted from the once from shift circuit 1, and then the outputted data is inputted again and right-shifted by a predetermined bit quantity.

Next, a floating-point addition and subtraction calculating circuit 61 using the shift circuit 1 and shift-out detecting circuit 2 in this example will be described.

As shown in Fig. 15, the floating-point addition and subtraction calculating circuit (the floating-point calculating circuit) 61 is composed of a comparing and subtracting circuit 62 which determines a larger one of the exponents $E_1$ and $E_2$, a digit adjustment shift circuit 63, a shift-out detecting circuit 64, a rounding process circuit 65, a mantissa addition and subtraction calculating circuit 66, a normalization shift circuit 67, a shift-out detecting circuit 68, a rounding process circuit 69 and an exponent increasing and decreasing circuit 71.

The comparing and subtracting circuit 62 inputs two floating-point numbers $X_1$, $X_2$, and outputs the addition result (summation) $X_3$ $(=X_1+X_2)$ of the floating-point number $X_1$ and the floating-point number $X_2$. The comparing and subtracting circuit 62 inputs the floating-point number $X_1$, $X_2$ and the exponent $E_1$, $E_2$ and determines a larger one of the exponents $E_1$, $E_2$. The digit adjustment shift circuit 63 shifts the mantissa of the floating-point number with smaller exponent to the direction of the least significant bit to adjust the digit.

The shift-out detecting circuit 64 checks whether or not "1" is contained in the shifted-out data. The rounding process circuit 65 shortens shifted data to the number of digits of the format in a predetermined rounding method. The mantissa addition and subtraction calculating circuit 66 carries out an addition and subtraction calculation of mantissas.

The normalization shift circuit 67 normalizes an addition and subtraction calculation result. The shift-out detecting circuit 68 checks whether there is shifted-out as a result of the normalization and "1" is contained in the shifted-out data.

The rounding process circuit 69 shortens the shifted data to the number of digits in the format in a predetermined rounding method. The exponent increasing and decreasing circuit 71 corrects the exponent based on the normalization shift quantity.

Here, the above mentioned shift circuit 1 and shift-out detecting circuit 2 are used as the digit adjustment shift circuit 63, the shift-out detecting circuit 64, the normalization shift circuit 67 and the shift-out detecting circuit 68.

Next, the operation of the floating-point number addition and subtraction calculating circuit 61 of this example will be described.

First, the comparing and subtracting circuit 62 inputs the exponent $E_1$, $E_2$ of two floating-point numbers $X_1$, $X_2$ and determines a larger one of the exponents $E_1$, $E_2$, and calculates the difference $(E_1-E_2)$ or $(E_2-E_1)$. Then, the comparing and subtracting circuit 62 outputs the comparing signal and a digit adjustment shift quantity signal.

The digit adjustment shift circuit 63 inputs the mantissa F1, $F_2$ of the floating-point numbers $X_1$, $X_2$, the comparing signal and the digit adjustment shift quantity signal, makes the smaller one of the exponents $E_1$, $E_2$ equal to the larger one based on the comparing signal and the digit adjustment shift quantity signal. Then, the digit adjustment shift circuit 63 shifts the mantissa for the smaller exponent to the direction of the least significant bit by the difference.

The digit adjustment shift circuit 63 inputs the mantissa for the smaller exponent of mantissas F1, $F_2$. For example, in case of 64 bits, the digit adjustment shift circuit 63 inputs $a_{63}$, $a_{62}$, ..., $a_3$, $a_2$, $a_1$, $a_0$ of the respective digits of F1 $(F_2)=(a_{63}a_{62} \cdots a_3a_2a_1a_0)$.

The shift-out detecting circuit 64 outputs the sticky signal STOUT of "1" to promote the rounding process determining process, when "1" is contained in the shifted-out data as the result of the shifting process by the digit adjustment shift circuit 63.

The sticky signal STOUT outputted from the shift-out detecting circuit 64 is used for the determination of whether data correction should be carried out in accordance with the digit adjustment in the floating-point calculation.

The rounding process circuit 65 shortens the calculation result obtained from the digit adjustment shift circuit 63 to the number of digits (64 digits in this example) of the format in a predetermined rounding method based on the sticky signal STOUT outputted from the shift-out detecting circuit 64 and the shifted-out data. Here, the rounding process circuit 65 receives the shifting process result from the digit adjustment shift circuit 63 and carries out the predetermined rounding process, after receiving the sticky signal STOUT and starting the determining process of the rounding method.

The rounding process circuit 65 selects and carries out a suitable one of the rounding processes to round a value to a near value to the value, to round the value for 0, to round the value for the positive infinity, and to round the value for the negative infinity, based on the sticky signal STOUT and the shifted-out data, for reduction an accumulated error.

The mantissa addition and subtraction calculating circuit 66 carries out the addition and subtraction calculation of mantissa after the digit adjustment rounded by the rounding process circuit 65.

The normalization shift circuit 67 calculates the number of digits as a normalization shift quantity to the integer part from the digit of the most significant bit of "1" of the addition and subtraction calculation result obtained from the mantissa addition and subtraction calculating circuit 66 and carries out a shifting process by the normalization shift quantity.

The shift-out detecting circuit 68 outputs the sticky signal STOUT to promote the rounding process determining process when "1" is contained in the shifted-out data at least as the result of the shifting process by the normalization shift circuit 67.

The sticky signal STOUT outputted from the shift-out detecting circuit 68 is used for the determination of whether data correction should be carried out as the result of the digit adjustment by the floating-point calculation.

The rounding process circuit 69 shortens the calculation result obtained in the normalization shift circuit 67 to the number of digits of the format in a predetermined rounding method based on the sticky signal STOUT outputted from the shift-out detecting circuit 68 and the shifted-out data.

The rounding process circuit 69 receives the sticky signal STOUT and then receives the shifting process result from the digit adjustment shift circuit 63 or the normalization shift circuit 67 after starting the rounding method determining process, and thereafter carries out the predetermined rounding method.

The exponent increasing and decreasing circuit 71 corrects the exponent based on the normalization shift quantity obtained by the normalization shift circuit 67 and outputs the exponent $E_3$ of the calculation result $X_3$ ($=X_1+X_2$).

In this way, according to the circuit structure in this example, the sticky signals $ST_1$, $ST_2$, ..., and $ST_6$ outputted from the 1-bit detecting circuit 13, the 2-bit detecting circuit 14, the 4-bit detecting circuit 15, the 8-bit detecting circuit 16, the 16-bit detecting circuit 17, and the 32-bit detecting circuit 18 are collected by the collecting circuit 21 directly or via the relaying circuit 19 (the sticky signal $ST_1$ passes through the 4-bit detecting circuit 15). Then, finally, the sticky signal STOUT is outputted. For example, the number of logic stages through which the sticky signal $ST_1$ ($ST_2$, $ST_3$, ..., $ST_6$) passes is as less as 4 regardless of the shift quantity, compared with a conventional example in which the number of stages is 13.

Therefore, as in the conventional example, the unnecessary delay in case of the output of the sticky signal S1 of "1" via all the 2-input selectors 122, 123, ..., 127 can be reduced. For this reason, the generation of the shift out (rounding) of "1" can be detected at high speed, and the sticky signal STOUT can be outputted to inform that the shift-out of "1" is generated to the rounding process circuit 65 (69), before the shifted data is outputted from the digit adjustment shift circuit 63 (the normalization shift circuit 67). Therefore, it is possible to contribute to the improvement in operation speed of the floating-point addition and subtraction calculating circuit 61.

Also, for example, because the 4-input NAND circuit is used, the collecting circuit 21 can rather reduce the calculation time, compared with the 6-input NAND circuit.

Also, by reducing the size of a transistor of the logic circuit of the detecting circuit at the previous stage (e.g., the 1-bit shift circuit 13) compared with the size of a transistor of the side of the subsequent stage (e.g., the 32-bit detecting circuit 18), the size of the shift circuit and the size of the whole shift-out detecting circuit can be reduced, while attempting to shorten an average calculation time.

[The second embodiment]

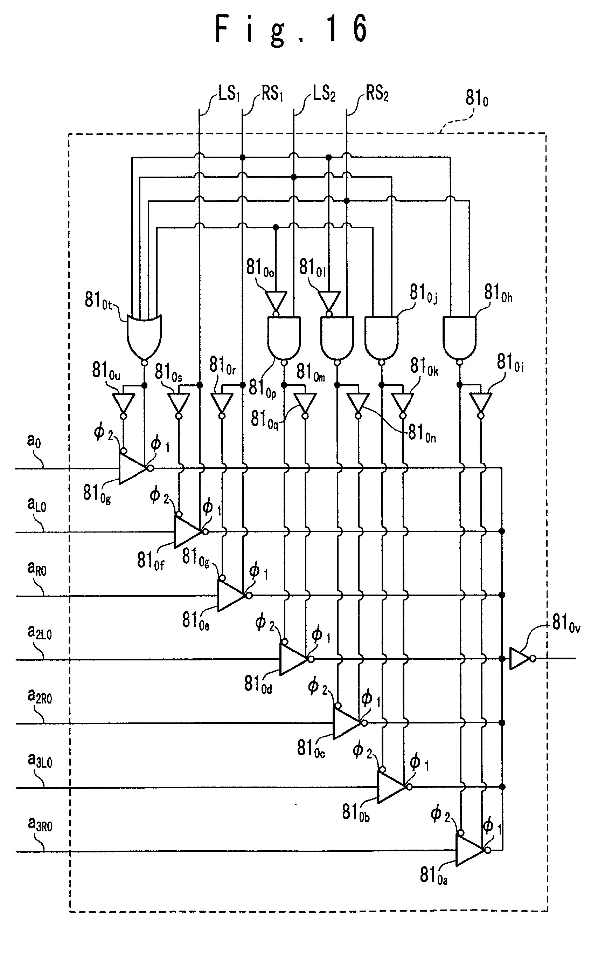

Fig. 16 is the circuit diagram showing the circuit structure of the multiplexer circuit of the shift circuit according to the second embodiment of the present invention.

This example is different from the above mentioned first embodiment in that the 1-bit shift circuit 1 and the 2-bit shift circuit 2 are collected into a variable shift circuit which can carry out 1-bit shift, 2-bit shift and 3-bit shift.

Because the circuit structure except this is the same as that of the above mentioned first embodiment, the brief description is given.

The variable shift circuit for 64 bits is composed of the multiplexer circuits $81_0$, $81_1$, ..., $81_{63}$. For example, the multiplexer circuit $81_0$ corresponding to the least significant bit is composed of clock inverter circuits $81_0a$, $81_0b$, $81_0c$, $81_0d$, $81_0e$, $81_0f$, and $81_0g$, 2-input NAND circuits $81_0h$, $81_0j$, $81_0m$, and $81_0p$, and inverter circuits $81_0i$, $81_0k$, $81_0l$, $81_0n$, $81_0O$, $81_0q$, $81_0r$, $81_0s$, $81_0u$, and $81_0v$, as shown in Fig. 16.

Each of the clock inverter circuits $81_0a$, $81_0b$, $81_0c$, $81_0d$, $81_0e$, $81_0f$, and $81_0g$ is set to the conductive state to invert an input signal or to the blocking-off state to prevent the passage of the input signal, according to the state of the control signals supplied to two control terminals $\phi_1$, $\phi_2$.

The 2-input NAND circuit $81_0h$ receives the right 1-bit shift signal $RS_1$ and the right 2-bit shift signal $RS_2$ and outputs the NAND calculation result of both.

The inverter circuit $81_0i$ inverts the output of the 2-input NAND circuit $81_0h$.

The 2-input NAND circuit $81_0j$ receives the left 1-bit shift signal LS1 and the left 2-bit shift signal $LS_2$ and outputs the NAND calculation result of both.

The inverter circuit $81_0k$ inverts the output of the 2-input NAND circuit $81_0j$.

The inverter circuit $81_0l$ inverts the right 1-bit shift signal $RS_1$.

The 2-input NAND circuit $81_0m$ receives the output of the inverter circuit $81_0l$ and the right 2-bit shift signal $RS_2$ and outputs the NAND calculation result of both.

The inverter circuit $81_0n$ inverts the output of the 2-input NAND circuit $81_0m$.

The inverter circuit $81_0O$ receives and inverts the left 1-bit shift signal $LS_1$.

The 2-input NAND circuit $81_0p$ receives the output of the inverter circuit $81_0O$ and the left 2-bit shift signal $LS_2$, and outputs the NAND calculation result of both.

The inverter circuit $81_0q$ inverts the output of the 2-input NAND circuit $81_0p$.

The inverter circuit $81_0r$ receives and inverts the right 1-bit shift signal $RS_1$ to give to the control terminal $\phi_2$ of the clock inverter circuit $81_0e$.

The inverter circuit $81_0s$ receives and inverts the left 1-bit shift signal $LS_1$ to give to the control terminal $\phi_2$ of the clock inverter circuit $81_0f$.

The NOR circuit $81_0t$ receives the right 1-bit shift signal $RS_1$, the left 1-bit shift signal $LS_1$, the right 2-bit shift signal $RS_2$ and the left 2-bit shift signal $LS_2$, and outputs the non-selection signal of the "1" state only when all 4 signals are in the "0" state.

The inverter circuit $81_0u$ receives and inverts the output signal of the NOR circuits $81_0t$ to give to the control terminal $\phi_2$ of the clock inverter circuit $81_0g$.

The inverter circuit $81_0v$ inverts and outputs either of the output signals from the clock inverter circuits $81_0a$, $81_0b$, $81_0c$, $81_0d$, $81_0e$, $81_0f$, and $81_0g$.

Here, the output signals from the inverter circuit $81_0i$ and the 2-input NAND circuit $81_0h$ are supplied to the control terminals $\phi_1$, $\phi_2$ of $81_0a$ of the clock inverter circuits, respectively.

Also, the output signals from the inverter circuit $81_0k$ and the 2-input NAND circuit $81_0j$ are supplied to the control terminals $\phi_1$, $\phi_2$ of the clock inverter circuit $81_0b$, respectively. Also, the output signals from the inverter circuit $81_0n$ and the 2-input NAND circuit $81_0m$ are supplied to the control terminals $\phi_1$, $\phi_2$ of the clock inverter circuit $81_0c$, respectively. Also, the output signals from the inverter circuit $81_0q$ and the 2-input NAND circuit $81_0p$ are supplied to the control terminals $\phi_1$, $\phi_2$ of the clock inverter circuit $81_0d$, respectively.

Also, the right 1-bit shift signal $RS_1$ and the output signal from the inverter circuit $81_0r$ are supplied to the control terminals $\phi_1$, $\phi_2$ of the clock inverter circuit $81_0e$, respectively. Also, the left 1-bit shift signal $LS_1$ and the output signal from the inverter circuit $81_0s$ are supplied to the control terminals $\phi_1$, $\phi_2$ of the clock inverter

circuit $81_0f$, respectively. Also, the output signals from the NOR circuit $81_0t$ and the inverter circuit $81_0u$ are supplied to the control terminals $\phi_1$, $\phi_2$ of the clock inverter circuit $81_0g$, respectively.

Next, the operation of the multiplexer circuit $81_0$ will be described.

First, when only the right 1-bit shift signal $RS_1$ and the right 2-bit shift signal $RS_2$ are received at the same time, the output of the 2-input NAND circuit $81_0h$ becomes "0". When "1" and "0" are supplied to the control terminals $\phi_1$, $\phi_2$ of the clock inverter circuit $81_0a$, respectively, only the clock inverter circuit $81_0a$ becomes a conductive state, and a bit data $a_3R_0$ obtained by shifting the least significant bit a0 of the mantissa in the right direction by 3 bits passes the clock inverter circuit $810a$ and is outputted from the inverter circuit $810v$.

Also, when only the left 1-bit shift signal $LS_1$ and the left 2-bit shift signal $LS_2$ are received at the same time, the output of the 2-input NAND circuit $81_0j$ becomes "0". Also, when "1" and "0" are supplied to the control terminals $\phi_1$, $\phi_2$ of the clock inverter circuit $81_0b$, respectively, only the clock inverter circuit $81_0b$ become the conductive state, and a bit data $a_3L_0$ obtained by shifting the least significant bit $a_0$ of the mantissa in the left direction by 3 bits passes the clock inverter circuit $81_0b$ and is outputted from the inverter circuit $81_0v$.

Also, when only the right 2-bit shift signal $RS_2$ is received, the output of the 2-input NAND circuit $81_0m$ becomes "0". Also, when "1" and "0" are supplied to the control terminals $\phi_1$, $\phi_2$ of the clock inverter circuit $81_0c$, respectively, only the clock inverter circuit $81_0c$ of become conductive state a bit data $a_2R_0$ obtained by shifting the least significant bit $a_0$ of the mantissa in the right direction by 2 bits passes the clock inverter circuit $81_0c$ and is outputted from the inverter circuit $81_0v$.

Also, when only the left 2-bit shift signal $LS_2$ is received, the output of the 2-input NAND circuit $81_0p$ becomes "0". Also, when "1" and "0" are supplied to the control terminals $\phi_1$, $\phi_2$ of the clock inverter circuit $81_0d$, respectively, only the clock inverter circuit $81_0d$ becomes the conductive state. As a result, a bit data $a_2L_0$ obtained by shifting the least significant bit $a_0$ with mantissa in the left direction by 2 bits passes the clock inverter circuit $81_0d$ and is outputted from the inverter circuit $81_0v$.

Also, when only the right 1-bit shift signal $RS_1$ is received, "1" and "0" are supplied to the control terminals $\phi_1$, $\phi_2$ of the clock inverter circuit $81_0e$, respectively. Only the clock inverter circuit $81_0e$ becomes conductive state, and a bit data $aR_0$ obtained by shifting the least significant bit $a_0$ of the mantissa in the right direction by 1 bit passes the clock inverter circuit $81_0e$ and is outputted from the inverter circuit $81_0v$.

Also, when only the left 1-bit shift signal $LS_1$ is received, "1" and "0" are supplied to the control terminals $\phi_1$, $\phi_2$ of the clock inverter circuit $81_0f$, respectively. Only the clock inverter circuit $81_0f$ becomes conductive state, and a bit data $aL_0$ obtained by shifting the least

significant bit $a_0$ of the mantissa in the left direction by 1 bit passes the clock inverter circuit $81_0$f and is outputted from the inverter circuit $81_0$v.

Also, when neither of the right 1-bit shift signal $RS_1$, the right 2-bit shift signal $RS_2$, the left 1-bit shift signal $LS_1$, the left 2-bit shift signal $LS_2$ is received, the non-selection signal of the "1" state is outputted from the NOR circuit $81_0$t. Also, "1" and "0" are supplied to the control terminals $\phi_1$, $\phi_2$ of the clock inverter circuit $81_0$g, respectively, and only the clock inverter circuit $81_0$g become conductive state. As a result, the least significant bit $a_0$ of the mantissa passes through the clock inverter circuit $81_0$g as it is and is outputted from the inverter circuit $81_0$v.

In the same way, even in case of second bit or subsequent bits, the shifting process of the mantissa $(a_{63}a_{62} \cdots a_3a_2a_1a_0)$ is carried out by shifting it by a predetermined shift quantity.

According to the circuit structure in this example, the sticky signals outputted from the variable shift circuit, the 4-bit detecting circuit 15, the 8-bit detecting circuit 16, the 16-bit detecting circuit 17, and the 32-bit detecting circuit 18 are collected by the collecting circuit 21 directly or via the relaying circuit 19, and finally the sticky signal STOUT is outputted. Therefore, the sticky signal STOUT can be sent to the rounding process circuit 65 (69) at high speed and it is possible to contribute to the improvement in the operation speed of the floating-point addition and subtraction calculating circuit 61.

Also, the number of logic stages in the multiplexer circuit $81_0$ can be reduced from 4 to 2, compared with the case of using the multiplexer circuits $5_0$, $6_0$. Therefore, the shifting process can be sped up.

[The third embodiment]

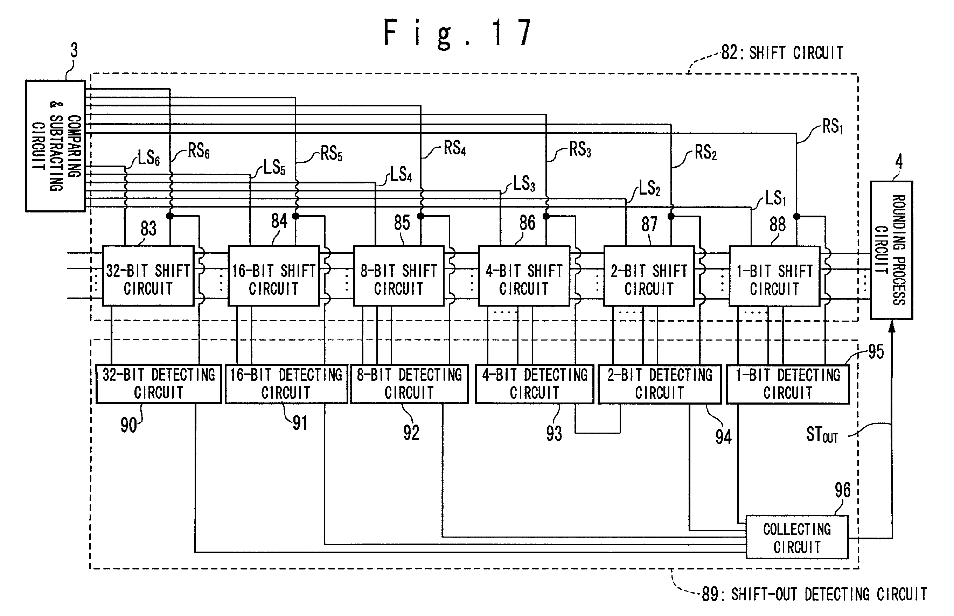

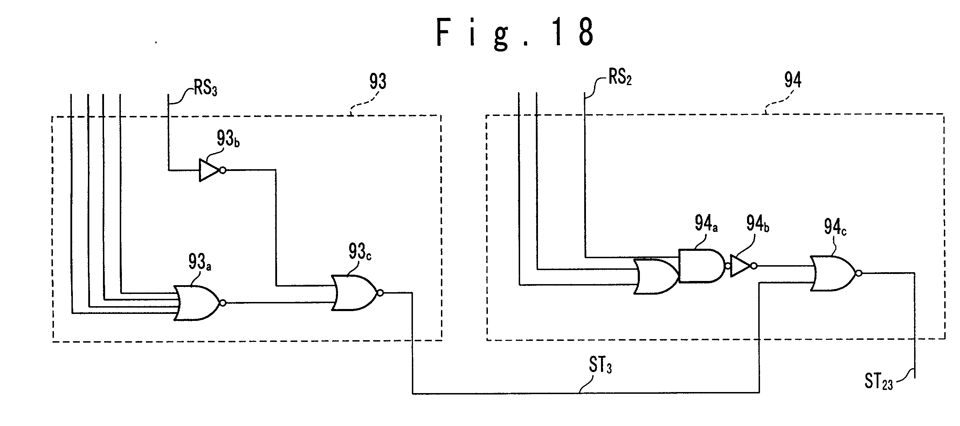

Fig. 17 is a block diagram showing the circuit structure of the shift circuit and the shift-out detecting circuit according to the third embodiment of the present invention. Also, Fig. 18 is a circuit diagram showing the circuit structure of the 4-bit detecting circuit and the 2-bit detecting circuit of the same shift-out detecting circuit.

This example is different from the above-mentioned first embodiment in that the bit shift circuits are arranged from the 32-bit shift circuit such that the shift quantities of the respective bit shift circuits are arranged in a descending order.

As shown in Fig. 17, the shift circuit 32 is composed of a 32-bit shift circuit 83 to carry out 32-bit right shift of the mantissa $(a_{63}a_{62} \cdots a_3a_2a_1a_0)$ when receiving the right 32-bit shift signal $RS_6$ of "1" from the comparing and subtracting circuit 3, a 16-bit shift circuit 84 to carry out 16-bit right shift of the output data of the 32-bit shift circuit 83 when receiving the right 16-bit shift signal $RS_5$ of "1", a 8-bit shift circuit 85 to carry out 8-bit right shift of the output data of the 16-bit shift circuit 84 when receiving the right 8-bit shift signal $RS_4$ of "1", a 4-bit shift circuit 86 to carry out 4-bit right shift of the output data of the 8-bit shift circuit 85 when receiving the right 4-bit shift signal $RS_3$ of "1", a 2-bit shift circuit 87 to carry out 2-bit right shift of the output data of the 4-bit shift circuit 86 when receiving the right 2-bit shift signal $RS_2$ of "1", and a 1-bit shift circuit 88 to carry out 1-bit right shift of the output data of the 2-bit shift circuit 87 when receiving the right 1-bit shift signal $RS_1$ of "1".

As shown in Fig. 17, the shift-out detecting circuit 89 is composed of a 32-bit detecting circuit 90 which detects the shift-out of "1" as a result of the shifting process in the 32-bit shift circuit 83, a 16-bit detecting circuit 91 which detects the shift-out of "1" as a result of the shifting process in the 16-bit shift circuit 84, a 8-bit detecting circuit 92 which detects the shift-out of "1" as a result of the shifting process in the 8-bit shift circuit 85, a 4-bit detecting circuit 93 which detects the shift-out of "1" as a result of the shifting process in the 4-bit shift circuit 86, a 2-bit detecting circuit 94 which detects the shift-out of "1" as a result of the shifting process in the 2-bit shift circuit 87, a 1-bit detecting circuit 95 which detects the shift-out of "1" as a result of the shifting process in the 1-bit shift circuit 88, and a collecting circuit 96 which detects the shift-out of 21" in either of the 1-bit shift circuit 88, the 2-bit shift circuit 87, the 4-bit shift circuit 86, the 8-bit shift circuit 85, the 16-bit shift circuit 84, and the 32-bit shift circuit 83 to output the sticky signal STOUT.

It should be noted that as shown in Figs. 17 and 18, in this example, the sticky signal $ST_3$ outputted from the 4-bit detecting circuit 93 is once supplied to the 2-bit detecting circuit 94. The 2-bit detecting circuit 94 outputs the sticky signal $ST_{23}$ of "0" when the sticky signal $ST_3$ is "1" or the shift-out of "1" is detected in the 2-bit shift circuit 87.

As shown in Fig. 18, the 4-bit detecting circuit 93 is composed of a 4-input NOR circuit 93a which carries out the NOR logical operation of bits from the least significant bit to fourth bit, a inverter circuit 93b which inverts and output the right 4-bit shift signal $RS_3$, and a NOR circuit 93c which carries out the NOR logical operation of the output of the inverter circuit 93b and the output of the 4-input NOR circuit 93c and outputs the sticky signal $ST_3$.

Also, as shown in Fig. 18, the 2-bit detecting circuit 94 is composed of a 2-input OR 2-input NAND circuit 94a which carry out the NAND logical operation of the OR output between the least significant bit and the second bit and the right 2-bit shift signal $RS_2$, an inverter circuit 94b which invert the output of the 2-input OR 2-input NAND circuit 94a, and a 2-input NOR circuit 94c which carries out the NOR logical operation of the output of the inverter circuit 94b and the sticky signal $ST_3$ and output the sticky signal $ST_{23}$.

The operations of the shift circuit 82 and the shift-out detecting circuit 89 in this example are almost the same as those of the first embodiment except that the order of the shift quantities to be shifted in one bit shift circuit is different, when the bit shift circuits are combined and operated. Therefore, the description is omitted.

According to the circuit structure in this example, the sticky signals outputted from the 32-bit detecting circuit 90, the 16-bit detecting circuit 91, the 8-bit shift detecting circuit 92, the 2-bit detecting circuit 94, the 1-bit detecting circuit 95 are directly collected by the collecting circuit 96 and the sticky signal outputted from the 4-bit detecting circuit 93 is collected by the collecting circuit 96 via the 2-bit detecting circuit 94. The collecting circuit outputs the sticky signal STOUT as the last output. Therefore, the sticky signal STOUT can be sent to the rounding process circuit 65 (69) at high speed and it is possible to contribute to the improvement in the operation speed of the floating-point addition and subtraction calculating circuit 61.

Also, the respective bit shift circuits are arranged in order of 32-bit shift circuit 83, 7, the 16-bit shift circuit 84, the 8-bit shift circuit 85, the 4-bit shift circuit 86, the 2-bit shift circuit 87 and the 1-bit shift circuit 88, that is, in order of larger shift quantity from the input side. Therefore, when the right 32-bit shift signal $RS_6$ is "1", for example, the 32-bit detecting circuit 90 corresponding to 32-bit shift circuit 83 can output the calculation result at the timing earlier than in the first embodiment.

As described above, the embodiments of the present invention are described in detail, with reference to the drawings. However, a specific circuit structure is not limited to these embodiments. Any modification which is not apart from the spirits of the present invention is contained in the present invention even if there is a change of the design.

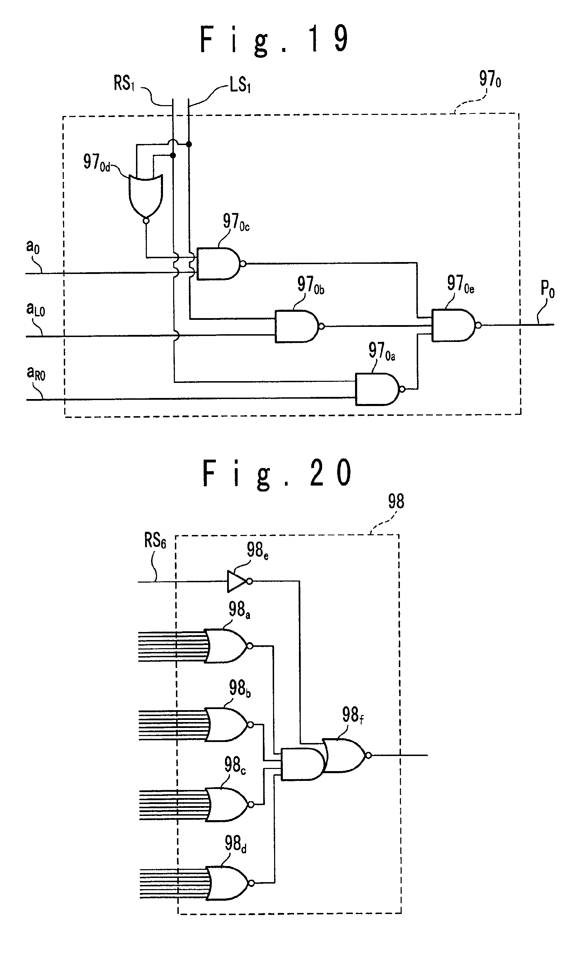

For example, in the above mentioned embodiments, the case where the multiplexer circuit $5_0$ is composed of the clock inverter circuits $5_0a$, $5_0b$, $5_0c$ is described. However, as shown in Fig. 19, the NAND circuit may be used in places of the clock inverter circuit. Also, in place of the multiplexer circuit $5_0$, the multiplexer circuit $97_0$ may be composed of a NAND circuit $97_0a$ which carries out the NAND operation of the right 1-bit shift signal $RS_1$ and the right 1-bit shift data $aR_0$ and outputs the calculation result, a NAND circuit $97_0b$ which carries out the NAND operation of the left 1-bit shift signal $LS_1$ and left 1-bit shift data $aL_0$ and outputs the calculation result, a NAND circuit $97_0c$ which carries out the NAND operation of the operation result of a NOR circuit $97_0d$ which carries out the NOR operation of the right 1-bit shift signal $RS_1$ and the left 1-bit shift signal $LS_1$, and the least significant bit $a_0$ of the mantissa, and a NAND circuit $97_0e$ which carries out the NAND operation of the outputs of the NAND circuit $97_0a$, $97_0$ b and $97_0$ c. By this, a circuit can be simplified and the number of parts can be reduced.

Also, in the above mentioned embodiment, eight 4-input NOR circuits 41, 42, ..., 48 are used in the 32-bit detecting circuit 18. However, in place of these circuits, the 32-bit detecting circuit 98 may be formed using four 8-input NOR circuits 98a, 98b, 98c, and 98d.

This 32-bit detecting circuit 98 is composed of 8-input NOR circuits 98a, 98b, 98c and 98d, and the 4-input NAND 2-input NOR circuit 98f which outputs the NOR calculation result of the AND calculation result of the outputs of the 8-input NOR circuits 98a, 98b, 98c and 98d, and the output of an inverter circuit 98e which inverts the right 32-bit shift signal $RS_6$.

Thus, the number of logic stages can be reduced.

Also, in the first embodiment, the case where the shift-out detecting circuit 2 outputs the sticky signals $ST_1$, $ST_2$, and $ST_3$ to the collecting circuit 21 via the relaying circuit 19 is described. However, the shift-out detecting circuit 99 may be formed using a 6-input collecting circuits 99a such that the sticky signals $ST_1$, $ST_2$, and $ST_3$ are directly supplied to the collecting circuits 99a.

By this, when "there is a shift-out of "1" is detected at the previous stage (e.g., the detecting circuit of 1 bit), it is possible to output the signal output from the collecting circuit 99a of the last stage at an earlier timing and the calculation can be sped up.

Also, the case where the digit adjustment shift circuit 1 and the shift-out detecting circuit 2 are provided separately for the digit adjustment shift and the normalization shift is described. However, the circuits may be shared. Also, the rounding process circuit may be shared by the digit adjustment shift and the normalization shift.

By this, the floating-point addition and subtraction calculating circuit can be simplified.

Also, the case where the present invention is applied to the rounding process in digit adjustment and the normalization process in the addition and subtraction calculation of the floating-point numbers is described. However, the present invention may be applied to the rounding process in case that a number is divided by a number with a power of 2.

Also, the case that the mantissa of the shift object is 64 bits is described but the present invention is not limited to this.

As described above, according to the present invention, a partial rounding detection signal outputted from at least one of partial rounding process circuit other than the partial rounding process circuit of a last stage does not pass through other partial rounding process circuits. The rounding detection signal outputted from the rounding detecting signal outputting circuit can be transferred to the rounding process circuit at high speed. Therefore, it is possible to contribute to the improvement in the operation speed of the floating-point calculating circuit.

Also, the size of an active element of the partial rounding detecting circuit corresponding to the partial shift circuit with a relatively large partial shift quantity is set larger than the size of an active element of the partial rounding detecting circuit corresponding to the partial shift circuit with a relatively small partial shift quantity.

Therefore, the whole rounding detecting circuit can be reduced in size while attempting to shorten the average calculation time.

## Claims

1. A shift and shift-out detecting circuit comprising:

   a plurality of partial shift circuits which respectively have bit shift quantities different from each other, and are connected in series, wherein each of said plurality of partial shift circuits receives a shift result as a previous shift result from said partial shift circuit of a previous stage and a corresponding shift instruction, shifts said previous shift result by the corresponding bit shift quantity in response to said shift instruction to produce a current shift result, and outputs the current shift result to said partial shift circuit of a subsequent stage;
   a plurality of shift-out detecting circuits which are respectively provided for said plurality of partial shift circuits, wherein each of said plurality of shift-out detecting circuits detects a shift-out of "1" bit from the current shift result and said corresponding shift instruction and generates a partial sticky signal when the shift-out is detected; and
   a collecting circuit which collects said partial sticky signals from said plurality of shift-out detecting circuits and generates a sticky signal to indicate generation of the shift-out.

2. The shift and shift-out detecting circuit according to claim 1, wherein said plurality of partial shift circuits are connected in series in order of larger bit shift quantities.

3. The shift and shift-out detecting circuit according to claim 1, wherein said plurality of partial shift circuits are connected in series in order of smaller bit shift quantities.

4. The shift and shift-out detecting circuit according to claim 2 or 3, further comprising:

   a relaying circuit which collects said partial sticky signals from predetermined ones of said plurality of shift-out detecting circuits to produce a new partial sticky signal and outputs the new partial sticky signal to said collecting circuit.

5. The shift and shift-out detecting circuit according to any of claim 1 to 4, wherein said bit shift quantities are $2^n$ (n is an integer equal to or larger than 0).

6. The shift and shift-out detecting circuit according to claim 5, wherein said bit shift quantities are $2^n$ (n is an integer equal to or larger than 0).

7. The shift and shift-out detecting circuit according to claim 6, wherein when said plurality of partial shift circuits are connected in series in order of smaller bit shift quantities, said partial sticky signal from said partial shift-out detecting circuit for said bit shift quantity of 1 bit is supplied to said relaying circuit via said partial shift-out detecting circuit for said bit shift quantity of 4 bits.

8. The shift and shift-out detecting circuit according to claim 6, wherein when said plurality of partial shift circuits are connected in series in order of larger bit shift quantities, said partial sticky signal from said partial shift-out detecting circuit for said bit shift quantity of 4 bits is supplied to said collecting circuit via said partial shift-out detecting circuit for said bit shift quantity of 2 bit.

9. A floating-point calculating circuit comprising:

   a comparing and subtracting circuit which inputs a first exponent of a first floating-point number and a second exponent of a second floating-point number, and generates a shit instruction indicating a difference between said first and second exponents;
   a digit adjustment shift and shift-out detecting circuit which carries out a first shifting operation of one of a first mantissa of the first floating-point number and a mantissa of the second floating-point number in response to said shit instruction, and detects shift-out in said first shifting operation in parallel to said first shifting operation to generate a first sticky signal;
   a first rounding process circuit which carries out a first rounding operation to the shifted mantissa in response to said first sticky signal when the shift-out is detected by said first shift-out detecting circuit; and
   a summing circuit which inputs a first sign of the first floating-point number and a second sign of the second floating-point number, and adds the shifted mantissa and the non-shifted mantissa based on the first and second signs.

10. The floating-point calculating circuit according to claim 9, wherein said digit adjustment shift and shift-out detecting circuit comprises:

    a plurality of partial shift circuits which respectively have bit shift quantities different from each other, and are connected in series, wherein each of said plurality of partial shift circuits receives a shift result as a previous shift result from said partial shift circuit of a previous stage and a corresponding partial shift instruction of said shift instruction, shifts said previous shift result by the corresponding bit shift quantity in response to said shift instruction to produce a current shift result, and outputs the current shift result to said partial shift circuit of a subsequent stage, and said partial shift circuit of the first stage receives said one mantissa as the previous shift result and said partial shift circuit of the last stage outputs the current shift result as said shifted mantissa to said first rounding process circuit;

a plurality of shift-out detecting circuits which are respectively provided for said plurality of partial shift circuits, wherein each of said plurality of shift-out detecting circuits detects a partial shift-out of "1" bit from the current shift result and said corresponding partial shift instruction and generates a partial sticky signal when the partial shift-out is detected; and

a collecting circuit which collects said partial sticky signals from said plurality of partial shift-out detecting circuits and generates said first sticky signal to indicate generation of said first shift-out.

11. The floating-point calculating circuit according to claim 10, wherein said plurality of partial shift circuits are connected in series in order of larger bit shift quantities.

12. The floating-point calculating circuit according to claim 10, wherein said plurality of partial shift circuits are connected in series in order of smaller bit shift quantities.

13. The floating-point calculating circuit according to claim 11 or 12, wherein said digit adjustment shift and shift-out detecting circuit further comprises:

a relaying circuit which collects said partial sticky signals from predetermined ones of said plurality of shift-out detecting circuits to produce a new partial sticky signal and outputs the new partial sticky signal to said collecting circuit.

14. The floating-point calculating circuit according to any of claims 10 to 12, wherein said bit shift quantities are $2^n$ (n is an integer equal to or larger than 0).

15. The floating-point calculating circuit according to claim 14, wherein said bit shift quantities are $2^n$ (n is an integer equal to or larger than 0).

16. The floating-point calculating circuit according to claim 15, wherein when said plurality of partial shift circuits are connected in series in order of smaller bit shift quantities, said partial sticky signal from said partial shift-out detecting circuit for said bit shift quantity of 1 bit is supplied to said relaying circuit via said partial shift-out detecting circuit for said bit shift quantity of 4 bits.

17. The floating-point calculating circuit according to claim 15, wherein when said plurality of partial shift circuits are connected in series in order of larger bit shift quantities, said partial sticky signal from said partial shift-out detecting circuit for said bit shift quantity of 4 bits is supplied to said collecting circuit via said partial shift-out detecting circuit for said bit shift quantity of 2 bit.

18. The floating-point calculating circuit according to any of claims 9 to 17, further comprising:

a normalization shift and shift-out detecting circuit which carries out a normalizing operation to the summation result from said summing circuit, and detects a second shift-out to generate a second sticky signal;

a second rounding process circuit which carries out a second rounding operation to the normalized summation result in response to said second sticky signal when the shift-out is detected by said first shift-out detecting circuit; and

an exponent increasing and decreasing circuit which adds the first and second exponents.

19. The floating-point calculating circuit according to claim 18, wherein said normalization shift and shift-out detecting circuit comprises:

a plurality of partial shift circuits which respectively have bit shift quantities different from each other, and are connected in series, wherein each of said plurality of partial shift circuits receives a shift result as a previous shift result from said partial shift circuit of a previous stage and a corresponding partial shift instruction of said shift instruction,.shifts said previous shift result by the corresponding bit shift quantity in response to said shift instruction to produce a current shift result, and outputs the current shift result to said partial shift circuit of a subsequent stage, and said partial shift circuit of the first stage receives said summation by said summing circuit as the previous shift result and said partial shift circuit of the last stage outputs the current shift result as said normalized summation to said second rounding process circuit;

a plurality of shift-out detecting circuits which are respectively provided for said plurality of partial shift circuits, wherein each of said plurality of shift-out detecting circuits detects a partial shift-out of "1" bit from the current shift result and said corresponding partial shift instruction and generates a partial sticky signal when the partial shift-out is detected; and
a collecting circuit which collects said partial sticky signals from said plurality of partial shift-out detecting circuits and generates said second sticky signal to indicate generation of said first shift-out.

20. The floating-point calculating circuit according to claim 19, wherein said plurality of partial shift circuits are connected in series in order of larger bit shift quantities.

21. The floating-point calculating circuit according to claim 19, wherein said plurality of partial shift circuits are connected in series in order of smaller bit shift quantities.

22. The floating-point calculating circuit according to any of claims 19 to 21, wherein said normalization shift and shift-out detecting circuit further comprises:

a relaying circuit which collects said partial sticky signals from predetermined ones of said plurality of shift-out detecting circuits to produce a new partial sticky signal and outputs the new partial sticky signal to said collecting circuit.

23. The floating-point calculating circuit according to any of claims 19 to 22, wherein said bit shift quantities are $2^n$ (n is an integer equal to or larger than 0).

# Fig.1 PRIOR ART

101  102     103

| S | E | F | |

# Fig. 2 PRIOR ART

EP 1 220 086 A2

# Fig.3 PRIOR ART

EP 1 220 086 A2

EP 1 220 086 A2
Fig. 4A PRIOR ART

Fig. 4A PRIOR ART

Fig. 4B PRIOR ART

# Fig. 5

EP 1 220 086 A2

Fig. 6

# F i g . 7

# F i g . 8

# F i g . 9

# F i g . 1 0

# Fig. 11

16

RS$_4$

31

28

r$_0$
r$_1$
r$_2$
r$_3$

29

r$_4$
r$_5$
r$_6$
r$_7$

32

33

ST$_4$

# Fig. 12

17

RS$_5$

34

S$_0$
S$_1$
S$_2$
S$_3$

35

S$_4$
S$_5$
S$_6$
S$_7$

36

S$_8$
S$_9$
S$_{10}$
S$_{11}$

37

S$_{12}$
S$_{13}$
S$_{14}$
S$_{15}$

39

38

ST$_5$

# Fig. 13

## F i g . 1 4 A

| $a_{63}$ | $a_{62}$ | $a_{61}$ | $a_{60}$ | $\cdots$ | $a_3$ | $a_2$ | $a_1$ | $a_0$ |
|---|---|---|---|---|---|---|---|---|

## F i g . 1 4 B

| 0 | $a_{63}$ | $a_{62}$ | $a_{61}$ | $\cdots$ | $a_4$ | $a_3$ | $a_2$ | $a_1$ | $a_0$ |
|---|---|---|---|---|---|---|---|---|---|

## F i g . 1 4 C

| 0 | 0 | 0 | $a_{63}$ | $\cdots$ | $a_6$ | $a_5$ | $a_4$ | $a_3$ | $a_2$ | $a_1$ | $a_0$ |
|---|---|---|---|---|---|---|---|---|---|---|---|

# Fig. 15

61: FLOATING POINT ADDITION AND SUBTRACTION CALCULATING CIRCUIT

$X_1 \left\{ \begin{array}{l} S_1 \\ E_1 \\ F_1 \end{array} \right.$

$X_2 \left\{ \begin{array}{l} S_2 \\ E_2 \\ F_2 \end{array} \right.$

62 COMPARING & SUBTRACTING CIRCUIT

63 DIGIT ADJUSTMENT SHIFT CIRCUIT

64 SHIFT-OUT DETECTING CIRCUIT

65 ROUNDING PROCESS CIRCUIT

66 MANTISSA ADDING AND SUBTRACTING CIRCUIT

67 NORMALIZATION SHIFT CIRCUIT

68 SHIFT-OUT DETECTING CIRCUIT

69 ROUNDING PROCESS CIRCUIT

71 EXPONENT INCREASING AND DECREASING CIRCUIT

$\left. \begin{array}{l} S_3 \\ E_3 \\ F_3 \end{array} \right\} X_3$

EP 1 220 086 A2

EP 1 220 086 A2

# Ｆｉｇ．１６

34

# Fig. 17

EP 1 220 086 A2

82: SHIFT CIRCUIT

COMPARING & SUBTRACTING CIRCUIT — 3

$RS_1$ $RS_2$ $RS_3$ $RS_4$ $RS_5$ $RS_6$

$LS_6$ $LS_5$ $LS_4$ $LS_3$ $LS_2$ $LS_1$

ROUNDING PROCESS CIRCUIT — 4

83 — 32-BIT SHIFT CIRCUIT

84 — 16-BIT SHIFT CIRCUIT

85 — 8-BIT SHIFT CIRCUIT

86 — 4-BIT SHIFT CIRCUIT

87 — 2-BIT SHIFT CIRCUIT

88 — 1-BIT SHIFT CIRCUIT

95

32-BIT DETECTING CIRCUIT — 90

16-BIT DETECTING CIRCUIT — 91

8-BIT DETECTING CIRCUIT — 92

4-BIT DETECTING CIRCUIT — 93

2-BIT DETECTING CIRCUIT — 94

1-BIT DETECTING CIRCUIT

$ST_{OUT}$

96 — COLLECTING CIRCUIT

89: SHIFT-OUT DETECTING CIRCUIT

EP 1 220 086 A2

# F i g . 1 9

# F i g . 2 0

## Fig. 21